# EUROPEAN PATENT SPECIFICATION

(11) **EP 3 827 052 B1**
(45) Date of publication and mention of the grant of the patent: **02.09.2026**
(21) Application number: 19753488.6
(22) Date of filing: 08.07.2019
(51) Int. Cl.: C09D 4/00, C09D 183/04, C09D 183/14

(54) **CRACK RESISTANT COATING COMPOSITION AND METHOD OF MAKING THEREOF**
RISSBESTÄNDIGE BESCHICHTUNGSZUSAMMENSETZUNG UND VERFAHREN ZUR HERSTELLUNG DAVON
COMPOSITION DE REVÊTEMENT RÉSISTANT AU CRAQUELAGE ET SON PROCÉDÉ DE PRÉPARATION

(30) Priority: 23.07.2018 US 201816042127
(43) Date of publication of application: 02.06.2021
(73) Proprietor: Momentive Performance Materials Inc., Waterford, NY 12188 (US)
(72) Inventor: SAMANTARA, Laxmi, Bangalore 560068 (IN); DAVID, Jennifer Lynn, New York 12020 (US); RAMAKRISHNAN, Indumathi, Bangalore 560066 (IN); HAYES, Robert, Mechanicville, New York 12118 (US); MURUGESAN, Karthikeyan, Bangalore 560102 (IN)
(74) Representative: Gille Hrabal Partnerschaftsgesellschaft mbB Patentanwälte
(86) International application number: PCT/US2019/040764
(87) International publication number: WO 2020/023200

(56) References cited:
- EP-A1- 1 826 239
- EP-A1- 1 826 239
- EP-A2- 0 763 581
- EP-A2- 0 763 581
- CN-A- 108 102 538
- CN-A- 108 102 538
- JP-A- 2015 116 772
- JP-A- 2015 116 772
- US-A1- 2008 031 642
- US-A1- 2008 031 642

## Description

### FIELD

The present invention relates to coating compositions for coating a variety of substrates. In particular, the present invention relates to a coating composition that provides an abrasion resistant coating, such as for a hardcoat formulation.

### BACKGROUND

Polymeric materials, particularly thermoplastics such as polycarbonate, are promising alternatives to glass for use as a structural material in a variety of applications, including automotive, transportation, and architectural glazing applications, where increased design freedom, weight savings, and improved safety features are in high demand. Plain polycarbonate substrates, however, are limited by their lack of abrasion, chemical, ultraviolet (UV), and weather resistance, and, therefore, need to be protected with optically transparent coatings that alleviate above limitations in the aforementioned applications.

Silicone hardcoats have been traditionally used to improve the abrasion resistance and UV resistance of various polymers including polycarbonate and acrylics. This enables the use of polycarbonates in a wide range of applications, including architectural glazing and automotive parts such as headlights.

The addition of a thermally curable silicone hardcoat generally imparts abrasion resistance to the polymeric substrate. The addition of organic or inorganic UV-absorbing materials in the silicone hardcoat layer can improve the weatherability of the polymeric substrate. However, over prolonged outdoor exposure, micro cracks start to form and coating failure occurs. Crack formation is an undesirable phenomena and it limits the coating's durability to protect the underlying substrate. There is a need to develop hard coats that provide improved abrasion and weathering performance to plastic substrates with improved crack resistance. There were different ways crack resistance in a coating has been sought to be improved. In JP2015 116772 A, an abrasion resistant hard coating for plastic substrates is disclosed. The document further discloses a composition comprising tetraethoxysilane, a solution of colloidal silica in 2-propanol, nonafluorohexyltrimethoxysilane and aqueous hydrochloric acid solution. The composition os provided and cured on a PET film by a roll coater to obtain a cured water-repellent film.
EP 0763581 A2 discloses primer compositions for forming a layer between a plastic lens surface and an overlying hard coat layer to improve the shock resistance of the overall lense structure comprising a polyvinyl acetal, a hydrolysable organosilane cross-linking agent, a metal alkoxide and inorganic particles, as well as curing catalysts, aqueous HCl solution and solvents.
EP 1826239 A1 discloses a curable composition comprising a vinyl polymer having hydrolysable silyl groups and/or SiOH groups and organic UV absorbing groups bonded to the side chains, an organic UV absorber, and an organosilicon compound containing a nitrogen atom and an alkoxysilyl group in the molecule, which is coated and cured to an article to endow it with improved weathering resistance. Such composition may comprise a colloidal silica-laden organopolysiloxane composition obtained by stirring methyltriethoxysilane with isobutanol and water-dispersed colloidal silica, followed by the addition of diacetone alcohol, propylene glycol monomethyl ether, aqueous sodium propionate solution and a polyether-modified silicone compound acting as levelling agent.
CN 108102538 A discloses a preparation method of a hydrophobic coating. Therein, such method including the steps of forming a solution of water and ethanol, adding acetic acid, blending the solution with methyltrimethoxysilane and perfluorooctyltriethoxysilane, adding thus obtained solution to a silica sol, centrifugating, dispersing thus obtained sample in water and drying it before mixing it with a silicone to obtain a modified nano-SiO2 solution for immersion of a metal component is disclosed.
In US 2008/031642 A1, a procedure for obtaining a coating composition for forming a protective layer is disclosed. In this procedure, a silane bearing a hydrolysable group and an organic group derived from a compound having a hole transport function, methyltrimethoxysilane, colloidal silica, a disilane bearing hydrolysable methoxy groups, methyl alcohol and an ion exchange resin are mixed and agitated. After the addition of butanol and water effecting hydrolysis and the removal of the ion exchange resin by filtration, aluminum trisacetylacetonate, BHT, a phenol resin and 4-TMS-3-butyn-2-ol were added to obtain a coating composition for forming a protective layer. The coating composition is coated on a charge transporting layer by a dip coating method.
U.S. Patent No. 7,857,905 describes a flexible thermal cure silicone hardcoat that is allegedly obtained with improved crack resistance. Others have described improving crack resistance by controlling thickness of coating, molecular weight of resin, crosslinking density, and thermal expansion coefficient (U.S. Publication No. 2012/0058347); controlling concentration of metal oxide particles (U.S. Publication No. 2013/0164539); or controlling the UV absorber, concentration of catalysts, and ratio of hydrolysable silyl groups in a coating (U.S. Publication No. 2007/0219298). U.S. Patent No. 8,603,587 describes coating compositions with highly scratch-resistant coatings featuring high hardness in conjunction with very good weathering stability and crack resistance, even at coat thicknesses >40 um using different silane.

### SUMMARY

Provided herein is a coating composition suitable for forming a silicone hardcoat. The composition comprises a mixture of silanes as the base for forming the siloxanol resin. The combination of a component A with a component B as described herein provides a coating with good optical properties, adhesion, abrasion resistance, weatherability, and/or crack resistance as evaluated and understood with respect to various accepted test methods including, but not limited to, adhesion after water immersion, critical strain, abrasion, microindentation testing, etc.

In one aspect, provided is a composition comprising:
Component A of the formula (R¹)_{d}Si(OR²)_{4-d}, wherein R¹ is a C₁-C₃ monovalent hydrocarbon, R² is a C₁-C₃ monovalent hydrocarbon or a hydrogen radical and d is 0, 1, or 2, and
Component B, is selected from the group consisting of Formula 1, Formula 2, or a combination thereof:

   (R³)ₐSi(OR⁴)₄₋ₐ Formula 1

   (R⁵O)ₘ(R⁶)ₙSi(R⁹)ₓ(R¹⁰)_{y}(R¹¹)_{z}Si(R⁸)ₛ(OR⁷)ₚ Formula 2

   wherein R³ is chosen from a C₅-C₂₀ linear or branched alkyl radical, a C₅-C₂₀ fluoroalkyl, a mixture of hydrocarbon and fluorocarbon chain, C₅-C₂₀ linear or branched hydrocarbon chain containing thioester group, C₆-C₂₄ saturated or unsaturated linear or cyclic hydrocarbon chain containing amino group or urea group, R⁴ is C₁-C₂₀ monovalent hydrocarbon radical or a hydrogen radical; a is 1,2 or 3;
   R⁵and R⁷ are independently chosen from a C₁-C₂₀ monovalent hydrocarbon radical or a hydrogen radical;
   R⁶ and R⁸ are independently selected from a C₁ to C₃ monovalent hydrocarbon radical or a hydrogen radical; m and p are 1 to 3; n and s are 1 to 3 such that m + n is 3, and s + p is 3;
   R⁹ is chosen from a C₁-C₂₄ divalent hydrocarbon radical;
   R¹⁰ and R¹¹ are independently chosen from C₁ to C₂₄ monovalent hydrocarbon radical;
   x is 1 to 20, y is 0 to 20, and z is 0 to 20;
metal oxide particles;
UV absorber;
a catalyst; and
a solvent; and optionally comprising additives selected from an antioxidant, a thermal stabilizer, an adhesion promoter, filler, UV absorber, surfactant or a combination of two or more thereof, wherein component B is present in an amount of from 10 weight percent to 30 weight percent based on the total weight of the total silane composition.

The composition of the aspect, wherein R³ of component B is chosen from pentyl, hexyl, heptyl, octyl, nonyl decyl, dodecyl, 3,3,3-trifluoropentyl, 3,3,3-trifluororhexyl, 3,3,3-trifluoroheptyl, 3,3,3-trifluorooctly, perfluoropentyl, perfluorohexyl, perfluoroheptyl, or perfluorohexyl.

The composition of any previous embodiment, wherein R⁴ is selected from methyl and ethyl.

The composition of any previous embodiment, wherein component B is chosen from a silane of Formula 2 having the formula 2a: (R⁵O)ₘ(R⁶)Si-Z-Si(R⁸)ₛ(OR⁷)ₚ 2a where Z is a C1-C24 bivalent hydrocarbon radical.

In one embodiment, the bivalent hydrocarbon radical Z is of the formula -R²¹-R²³-R²²- where R²¹ and R²² are independently C₁-C₆ bivalent hydrocarbon groups, and R²³ is a C5-C10 bivalent cyclic group, which may be saturated, unsaturated, or aromatic.

The composition of any previous embodiment, wherein the component A is methyltrimethoxy silane.

The composition of any previous embodiment, wherein the metal oxide particles are present in an amount of from0.1 weight percent to 50 weight percent. In one embodiment, the metal oxide particles are present in an amount of from 0.5 weight percent to 30 weight percent. In one embodiment, the metal oxide particles are present in an amount of from 1 weight percent to 20 weight percent based on the total weight of the composition.

The composition of any previous embodiment, wherein the metal oxide particles chosen from silica, zirconia, titania, alumina, ceria, tin oxide, zinc oxide, antimony oxide, or a combination of two or more thereof.

The composition of any previous embodiment, wherein the metal oxide particles have an average particle size of from 1 nm to 250 nm.

The composition of any previous embodiment, further comprising additives selected from an antioxidant, a thermal stabilizer, an adhesion promoter, filler, UV absorber, surfactant or a combination of two or more thereof.

The composition of any previous embodiment, wherein the solvent is chosen from an aliphatic alcohol, a glycol ether, a cycloaliphatic alcohol, an aliphatic ester, a cycloaliphatic ester, an aliphatic hydrocarbon, a cycloaliphatic hydrocarbon, an aromatic hydrocarbon, a halogenated aliphatic compound, a halogenated cycloaliphatic compound, a halogenated aromatic compound, an aliphatic ether, a cycloaliphatic ether, an amide solvents, a sulfoxide solvent, or a combination of two or more thereof.

The composition of any previous embodiment, wherein the catalyst is at least one member selected from the group consisting of tetra-n-butylammonium acetate, tetra-n-butylammonium formate, tetra-n-butylammonium benzoate, tetra-n-butylammonium-2-ethylhexanoate, tetra-n-butylammonium-p-ethylbenzoate, tetra-n-butylammonium propionate, and TBD-acetate ( acetate of 1,5,7-triazabicyclo[4.4.0]dec-5-ene (TBD)).

In another aspect, provided is an article comprising a substrate and a coating disposed on at least a portion of a surface of the substrate, wherein the coating is formed from a composition according to any previous embodiment.

In another aspect, provided is an article comprising a substrate and a coating formed from the composition covering at least a portion of said substrate, the composition comprising:
Component A of the formula (R¹)_{d}Si(OR²)_{4-d}, wherein R¹ is a C₁-C₃ monovalent hydrocarbon, R² is a C₁-C₃ monovalent hydrocarbon or a hydrogen radical and d is 0, 1, or 2, and
Component B is selected from the group consisting of Formula 1, Formula 2, or a combination thereof:

   (R³)ₐSi(OR⁴)₄₋ₐ Formula 1

   (R⁵O)ₘ(R⁶)ₙSi(R⁹)ₓ(R¹⁰)_{y}(R¹¹)_{z}Si(R⁸)ₛ(OR⁷)ₚ Formula 2

   wherein R³ is chosen from a C₅-C₂₀ linear or branched alkyl radical, a C₅-C₂₀ fluoroalkyl, a mixture of hydrocarbon and fluorocarbon chain, C₅-C₂₀ linear or branched hydrocarbon chain containing thioester group, C₆-C₂₄ saturated or unsaturated linear or cyclic hydrocarbon chain containing amino group or urea group, R⁴ is C₁-C₂₀ monovalent hydrocarbon radical or a hydrogen radical; a is 1, 2, or 3;
   R⁵and R⁷ are independently chosen from a C₁-C₂₀ monovalent hydrocarbon radical or a hydrogen radical;
   R⁶ and R⁸ are independently selected from a C₁ to C₃ monovalent hydrocarbon radical or a hydrogen radical; m and p are 1 to 3; n and s are 1 to 3 such that m + n is 3, and s + p is 3;
   R⁹ is chosen from a C₁-C₂₄ divalent hydrocarbon radical;
   R¹⁰ and R¹¹ are independently chosen from C₁ to C₂₄ monovalent hydrocarbon radical;
   x is 1 to 20, y is 0 to 20, and z is 0 to 20;
metal oxide particles;
UV absorber;
a catalyst; and
a solvent, and optionally comprising additives selected from an antioxidant, a thermal stabilizer, an adhesion promoter, filler, UV absorber, surfactant or a combination of two or more thereof,

wherein component B is present in an amount of from 10 weight percent to 30 weight percent based on the total weight of the total silane composition,
further characterized in that said coating composition when cured has a critical strain of 1 to 10 as measured at 3-10 micron coating thickness.

The article of any previous embodiment, wherein R¹ is chosen from pentyl, hexyl, heptyl, octyl, nonyl decyl, dodecyl, 3,3,3-trifluoropentyl, 3,3,3-trifluorohexyl, 3,3,3-trifluoroheptyl, 3,3,3-trifluorooctyl, perfluoropentyl, perfluorohexyl, perfluoroheptyl, or perfluorohexyl.

The article of any previous embodiment, wherein R⁴ is selected from methyl and ethyl.

The article of any previous embodiment, wherein the component A is methyltrimethoxy silane.

The article of any previous embodiment, wherein the metal oxide particles are present in an amount of from 0.1 weight percent to 50 weight percent. In one embodiment, the metal oxide particles are present in an amount of from 0.5 weight percent to 30 weight percent. In one embodiment, the metal oxide particles are present in an amount of from 1 weight percent to 20 weight percent based on the total weight of the composition.

The article of any previous embodiment, wherein the metal oxide particles chosen from silica, zirconia, titania, alumina, ceria, tin oxide, zinc oxide, antimony oxide, or a combination of two or more thereof.

The article of any previous embodiment, wherein the metal oxide particles have an average particle size of from 1 nm to 250 nm.

The article of any previous embodiment, wherein the substrate is chosen from an acrylic polymer, a polyamide, a polyimide, an acrylonitrile-styrene copolymer, a styrene-acrylonitrile-butadiene terpolymer, a polyvinyl halide, a polyethylene, a polycarbonate, a copolycarbonate, a metal, a glass, or a combination of two or more thereof.

The article of any previous embodiment, wherein the coating formed from the composition is deposited on solid substrate by applying at least one coating deposition method selected from spray, dip, flow, spin.

The article of any previous embodiment, wherein the coating formed from the composition is cured. In one embodiment, optionally a primer coating is disposed between the coating formed from the composition and the substrate.

In still another aspect, provided is a method for forming an article with a coating. The method comprises applying a coating formed from the composition in accordance with any previous aspect or embodiment to a surface of a substrate.

In yet another aspect, provided is a method of forming a coating composition comprising mixing the materials employed in the composition of any previous aspect or embodiment.

These and other aspects and embodiments are further understood with respect to the drawings and detailed description.

### BRIEF DESCRIPTION OF THE DRAWINGS

The accompanying drawings illustrate various systems, apparatuses, devices and related methods, in which like reference characters refer to like parts throughout, and in which:
Figure 1 is a graph showing strain to failure for coating compositions of the Examples;
Figure 2 is a graph showing strain to failure and delta haze from Taber analysis for coating compositions of the Examples;
Figure 3 is a graph showing the damping factor of coating compositions of the Examples; and
Figure 4 is a graph showing the percent strain to failure of coating compositions of the Examples with varied aging time.

### DETAILED DESCRIPTION

Reference will now be made to exemplary embodiments, examples of which are illustrated in the accompanying drawings. It is to be understood that other embodiments may be utilized and structural and functional changes may be made. Moreover, features of the various embodiments may be combined or altered. As such, the following description is presented by way of illustration only and should not limit in any way the various alternatives and modifications that may be made to the illustrated embodiments. In this disclosure, numerous specific details provide a thorough understanding of the subject disclosure.

As used herein, the words "example" and "exemplary" mean an instance, or illustration. The words "example" or "exemplary" do not indicate a key or preferred aspect or embodiment. The word "or" is intended to be inclusive rather than exclusive, unless context suggests otherwise. As an example, the phrase "A employs B or C," includes any inclusive permutation (e.g., A employs B; A employs C; or A employs both B and C). As another matter, the articles "a" and "an" are generally intended to mean "one or more" unless context suggest otherwise.

Provided is a coating composition that may form a coating with one or more desirable properties including, but no limited to, optical properties, adhesion, abrasion resistance, weatherability, and/or crack resistance. The composition is a siloxanol based resin comprising a component A, a component B, metal oxide particles, a catalyst, a solvent and optionally UV absorber. In particular, the combination of the component A and the component B have been found to provide coatings formed from the composition with improved crack resistance compared to compositions employing the component A alone.

The component A may be chosen from an organoalkoxysilane of the formula (R¹)_{d}Si(OR²)_{4-d}, wherein R¹ is a C1-C3 monovalent hydrocarbon radical, preferably a C1-C3 alkyl radical, more preferably a methyl or ethyl group. R² is an R¹ or a hydrogen radical and d is 0, 1 or 2. Particularly suitable organoalkoxysilanes include organoalkoxysilanes, for example, methyltrimethoxysilane, methyltriethoxysilane, or a mixture thereof, which can form a partial condensate. Additional organoalkoxysilanes include, but are not limited to, tetraethoxysilane, ethyltriethoxysilane, diethyldiethoxysilane, tetramethoxysilane, dimethyldimethoxysilane, ethyltriethoxysilane, propyltriethoxysilane, etc. It will be appreciated that the component A may be provided by one type of silane, or two or more different silanes.

The component A may be present in an amount of from 5 weight percent to 99.9 weight percent, 10 weight percent to 90 weight percent, even from 20 weight percent to 80 weight percent, based on the total weight of the total silane composition. Here as elsewhere in the specification and claims, numerical values may be combined to form new and non-specified ranges.

The component B may be present in an amount of from 10 weight percent to 30 weight percent, based on the total weight of the total silane composition. Here as elsewhere in the specification and claims, numerical values may be combined to form new and non-specified ranges.

The Component B is selected from the group consisting of at least one of formula 1 or 2::

(R³)ₐSi(OR⁴)₄₋ₐ Formula 1

(R⁵O)ₘ(R⁶)ₙSi(R⁹)ₓ(R¹⁰)_{y}(R¹¹)_{z}Si(R⁸)ₛ(OR⁷)ₚ Formula 2

wherein R³ is chosen from a C₅-C₂₀ linear or branched alkyl radical, a C₅-C₂₀ fluoroalkyl, a mixture of hydrocarbon and fluorocarbon chain, C₅-C₂₀ linear or branched hydrocarbon chain containing thioester group, C₆-C₂₄ saturated or unsaturated linear or cyclic hydrocarbon chain containing amino group or urea group, R⁴ is C₁-C₂₀ monovalent hydrocarbon radical or a hydrogen radical; a is 1, 2 or 3 ;
R⁵ and R⁷ are independently chosen from a C₁-C₂₀ monovalent hydrocarbon radical or a hydrogen radical;
R⁶ and R⁸ are independently selected from a C₁ to C₃ monovalent hydrocarbon radical or a hydrogen radical; m and p are 1 to 3; n and s are 1 to 3 such that m + n is 3, and s + p is 3;
R⁹ is chosen from a C₁-C₂₄ divalent hydrocarbon radical;
R¹⁰ and R¹¹ are independently chosen from C₁ to C₂₄ monovalent hydrocarbon radical;
x is 1 to 20, y is 0 to 20, and z is 0 to 20.

In one embodiment, the component B is chosen from Formula 1. The thioester containing groups may be chosen from those of the formula -R¹²-S-C(O)-R¹³, where R¹² is a C₁-C₁₂ linear or branched bivalent hydrocarbon group and R¹³ is a C₁-C₁₂ monovalent hydrocarbon group. The amino containing hydrocarbons may be chosen from those of the formula -R¹⁴-N(R¹⁵)-R¹⁶ where R¹⁴ is chosen from a C₁-C₁₂ bivalent hydrocarbon group, R¹⁵ is chosen from hydrogen or a C1-C12 monovalent hydrocarbon group, R¹⁶ is chosen from hydrogen or a C₁-C₁₂ monovalent hydrocarbon group, or R¹⁴ and R¹⁶ are taken to form a 5-12 membered ring. The urea containing hydrocarbons may be chosen from those of the formula -R¹⁷-N(R¹⁸)-C(O)-N(R¹⁹)R²⁰, where R¹⁷ is chosen from a C₁-C₁₂ bivalent hydrocarbon group, R¹⁸, R¹⁹, and R²⁰ are independently chosen from hydrogen and a C₁-C₁₂ bivalent hydrocarbon group, or R¹⁷ and R²⁰ are taken to form a 5-12 membered ring.

When R³ is a fluoroalkyl, the fluoroalkyl group may have one or more fluorinated alkyl groups, and in embodiments may be a perfluoroalkyl group. Examples of suitable R³ groups include, but are not limited to, pentyl, hexyl, heptyl, octyl, nonyl decyl, dodecyl, 3,3,3-triflurorpentyl, 3,3,3-triflurorhexyl, 3,3,3-trifluroheptyl, 3,3,3-triflurooctly, perfluoropentyl, pefluorohexyl, pefluoroheptyl, perfluorohexyl.

In embodiments, R⁴ is a C₁-C₄ hydrocarbon radical. Particularly suitable hydrocarbon radical groups include alkyl groups. Non-limiting examples of suitable alkyl groups include, for example, a methyl or ethyl. In one embodiment, the component B is chosen from Formula 1, a is 1, and R⁴ is methyl or ethyl.

In embodiments, the component B may be of the Formula 1 and chosen from, pentyltrimethoxysilane, hexyltrimethoxysilane, heptyltrimethoxysilane, octyltrimethoxysilane, nonyltrimethoxysilane, decyltrimethoxysilane, dodecyltrimethoxysilane, pentyltriethoxysilane, hexyltriethoxysilane, heptyltriethoxysilane, octyltriethoxysilane, nonyltriethoxysilane, decyltriethoxysilane, dodecyltriethoxysilane, pentyltripropoxysilane, hexyltripropoxysilane, heptyltripropoxysilane, octyltripropoxysilane, nonyltripropoxysilane, decyltripropoxysilane anddodecyltripropoxysilane. It will be appreciated that the component B may be provided by a single type of silane or a mixture of two or more silanes.

In embodiments, the component B is chosen from a silane of Formula 2. The silane of Formula 2 may also be described by the formula 2a:

(R⁵O)ₘ(R⁶)ₙSi*-*Z-Si(R⁸)ₛ(OR⁷)ₚ 2a

where Z is a C₁-C₂₄ bivalent hydrocarbon radical. The bivalent hydrocarbon radical Z as well as those of R⁹-R¹¹ may be a linear or branched hydrocarbon and may optionally contain a cyclic group within the hydrocarbon chain. In one embodiment, Z may be represented as -R²¹-R²³-R²²- where R²¹ and R²² are independently C₁-C₆ bivalent hydrocarbon groups, and R²³ is a C₅-C₁₀ bivalent cyclic group which may be saturated, unsaturated, or aromatic. In one embodiment, R²³ is chosen from a bivalent cyclopentane, cyclohexane, cycloheptane, cyclooctane, cyclononane, cyclopentadiene, cyclopentene, cyclohexene, cycloheptene, cyclooctene, or benzene.

In embodiments, R⁵ and R⁷ are independently chosen from a C₁-C₄ hydrocarbon radical. Particularly suitable hydrocarbon radical groups include alkyl groups. Non-limiting examples of suitable alkyl groups include, for example, a methyl or ethyl.

Non-limiting examples of compounds from which the component B may be chosen include:

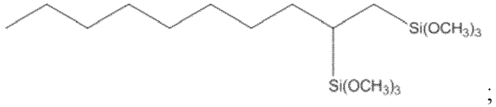

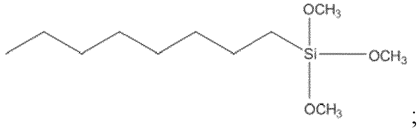

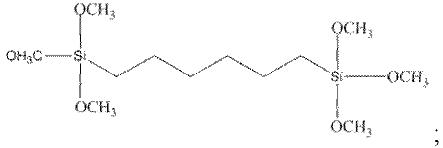

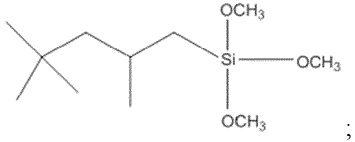

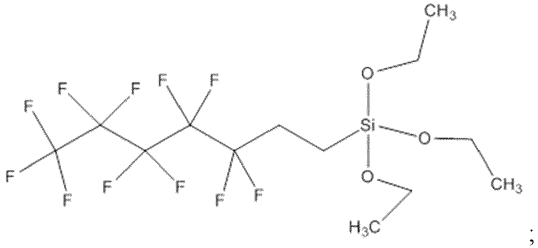

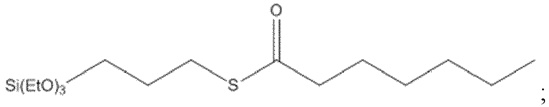

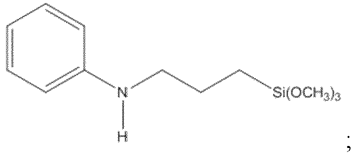

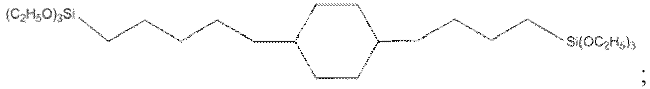

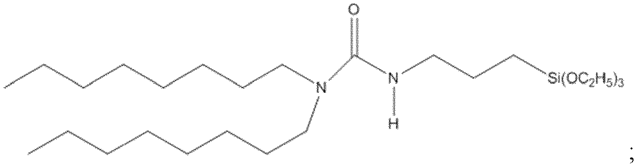

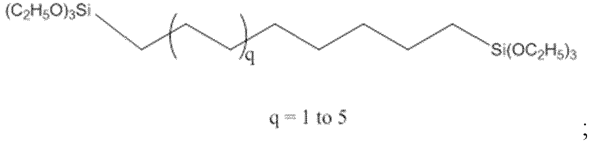

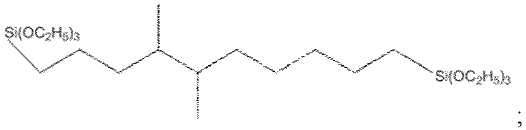

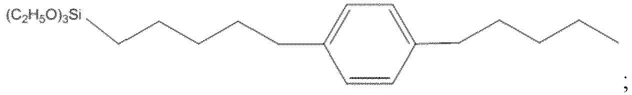

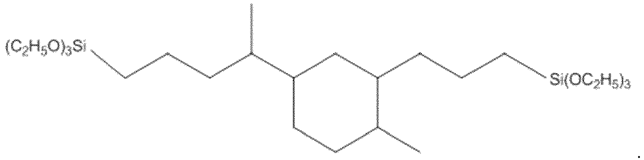

The component B may be present in an amount of up to 60 weight percent based on the total weight of the component A and the component B. Here as elsewhere in the specification and claims, numerical values may be combined to form new and non-specified ranges.

It will be appreciated that the component B may be chosen from two or more different suitable organofunctional silanes. In one embodiment, the composition comprises two or more organofunctional silanes of the type of Formula 1. In one embodiment, the composition comprises two or more organofunctional silanes of the type of Formula 2. In one embodiment, the composition comprises one or more silanes of the type of Formula 1 and one or more silanes of the type of Formula 2.

The composition further comprises metal oxide particles. The metal particles used in the composition of the invention are not particularly limited. Generally, the metal particles will be metal oxide particles. Suitable examples include, but are not limited to, silica, zirconia, titania, alumina, ceria, or a combination of two or more thereof. In one embodiment, the metal oxide nanoparticles are silica nanoparticles.

The size of the metal oxide particles may be selected as desired for a particular purpose or intended application. In embodiments, the metal oxide particles are nanosized particles. Nanoparticles may have dimensions in the range of one to 500 nanometers. For clear coat applications, the particles should have a size below a certain limit such that it will not scatter light passing through the coating. Particles with dimensions less than λ/2 do not scatter light of λ, where λ is the wavelength of light, and will not disrupt the transparency of the matrix in which they are incorporated. In embodiments, the metal particles have a diameter of 190 nanometers or less. In other embodiments, the metal particles have a diameter of from 1 nm to 190 nm; from 5 nm to 175 nm; from greater than 15 nm to 150 nm; or from 20 nm to 100 nm. Here as elsewhere in the specification and claims, numerical values may be combined to form new and non-specified ranges.

In one embodiment, the metal oxide comprises silica (SiO₂) particles. Generally, any colloidal silica can be used. Examples of suitable colloidal silica include, but are not limited to, fumed colloidal silica and precipitated colloidal silica. Particularly suitable colloidal silicas are those that are available in an aqueous medium. Colloidal silicas in an aqueous medium are usually available in a stabilized form, such as those stabilized with sodium ion, ammonia, or an aluminum ion. The colloidal silica may have particle diameters of from 5 to 250 nanometers, more specifically 10 to 150 nanometers, from 15 to 100 nanometers, even from 20 to 85 nanometers. Here as elsewhere in the specification and claims, numerical values may be combined to form new and non-specified ranges. Using relatively large colloidal silica particles has been found to provide a composition with excellent shelf life stability.

In one embodiment, the particle diameters for the metal oxide particles (including, e.g., colloidal silica) are determined in accordance with ASTM E2490-09 (2015), Standard Guide for Measurement of Particle Size Distribution of Nanomaterials in Suspension by Dynamic Light Scattering (DLS).

Colloidal silica is known in the art and commercially available. Dispersions include, for example, those under the trademarks of LUDOX^{®} AS-40 (Sigma Aldrich), SNOWTEX^{®} (Nissan Chemical), BINDZIL^{®} (Akzo Nobel) and NALCO^{®} 1034A (Nalco Chemical Company).

The composition also comprises a solvent. The solvent is not particularly limited. In one embodiment, the solvent may be chosen from an aliphatic alcohol, a glycol ether, a cycloaliphatic alcohol, an aliphatic ester, a cycloaliphatic ester, an aliphatic hydrocarbon, a cycloaliphatic hydrocarbon, an aromatic hydrocarbon, a halogenated aliphatic compound, a halogenated cycloaliphatic compound, a halogenated aromatic compound, an aliphatic ether, a cycloaliphatic ether, an amide solvents, a sulfoxide solvent, or a combination of two or more thereof. Examples of suitable solvents include, but are not limited to, alcohols, such as methanol, ethanol, propanol, isopropanol, n-butanol, tert-butanol, methoxypropanol, ethylene glycol, diethylene glycol butyl ether, or combinations thereof. Other polar organic solvents such as acetone, methyl ethyl ketone, ethylene glycol monopropyl ether, and 2-butoxy ethanol, can also be utilized. In embodiments, the solvent used is one or more selected from 1-methoxy-2-propanol, diacetone alcohol (DAA), acetyl acetone, cyclohexanone, methoxypropylacetate, ketones, glycol ether, or mixtures of two or more thereof. The amount of solvent in the composition ranges preferably from 25 wt.% to 85 wt.%, more preferably from 40 wt.% to 80 wt.%, and most preferably from 50 wt.% to 75 wt.%, all based on the total weight of the composition. The composition may also comprise a catalyst. The catalyst is not particularly limited and any suitable catalyst for curing the coating composition can be used.

The catalyst is at least one member selected from the group consisting of tetra-n-butylammonium acetate, tetra-n-butylammonium formate, tetra-n-butylammonium benzoate, tetra-n-butylammonium-2-ethylhexanoate, tetra-n-butylammonium-p-ethylbenzoate, tetra-n-butylammonium propionate and TBD-acetate (acetate salt of 1,5,7-triazabicyclo[4.4.0]dec-5-ene (TBD)).

The catalyst can be added to the coating formulation as desired for a particular purpose or intended application. Generally, the catalyst should be added in an amount that will not affect or impair the physical properties of the coating, but in a sufficient amount effective to catalyze the curing reaction. In one embodiment, the catalyst is provided in an amount ranging from 1 ppm to 75 ppm; from 10 ppm to 70 ppm; even from 20 ppm to 60 ppm. Here, as elsewhere in the specification and claims, numerical values may be combined to form new and non-specified ranges. The "ppm" value of the catalyst may be defined as parts per million.

Other additives such as hindered amine light stabilizers, antioxidants, dyes, flow modifiers and leveling agents or surface lubricants can be used in the topcoat. Other colloidal metal oxides can be present at up to 10% by weight of the aqueous/organic solvent borne siloxanol resin/colloidal silica dispersion and can include metal oxides such as, antimony oxide, cerium oxide, aluminum oxide, zinc oxide, and titanium dioxide. Additional organic UV absorbers may be used.

The UV absorbers can also be chosen from a combination of inorganic UV absorbers and organic UV absorbers. Examples of suitable organic UV absorbers include but are not limited to, those capable of co-condensing with silanes. Such UV absorbers are disclosed in U.S. Patent Nos. 4,863,520, 4,374,674, 4,680,232, and 5,391,795 which are herein incorporated by reference in their entireties. Specific examples include 4-[gamma-(trimethoxysilyl) propoxyl]-2-hydroxy benzophenone and 4-[gamma-(triethoxysilyl) propoxyl]-2-hydroxy benzophenone and 4,6-dibenzoyl-2-(3-triethoxysilylpropyl) resorcinol. When the UV absorbers that are capable of co-condensing with silanes are used, the UV absorber should co-condense with other reacting species by thoroughly mixing the coating composition before applying it to a substrate. Co-condensing the UV absorber prevents coating performance loss caused by the leaching of free UV absorbers to the environment during weathering.

The catalyst can be added to the coating composition directly or can be dissolved in a solvent or other suitable carrier. The solvent may be a polar solvent such as methanol, ethanol, n-butanol, t-butanol, n-octanol, n-decanol, 1-methoxy-2-propanol, isopropyl alcohol, ethylene glycol, tetrahydrofuran, dioxane, bis(2-methoxyethyl)ether, 1,2-dimethoxyethane, acetonitrile, benzonitrile, methylethyl ketone, dimethylformamide (DMF), dimethyl sulfoxide (DMSO), *N-*methylpyrrolidinone (NMP), and propylene carbonate.

The coating compositions may include other materials or additives to provide the coating with desired properties for a particular purpose or intended application. For example, the primer composition may also include other additives such as hindered amine light stabilizers, antioxidants, dyes, flow modifiers, and leveling agents. The composition of the invention can also include surfactants as leveling agents. Examples of suitable surfactants include, but are not limited to, surfactants such as silicone polyethers under the designation Silwet^{®} and CoatOSil^{®} available from Momentive Performance Materials, Inc. of Albany, N.Y., FLUORAD^{™} from 3M Company of St. Paul, Minn., and polyether-polysiloxane copolymers such as BYK^{®} -331 manufactured by BYK^{®}-Chemie. Suitable antioxidants include, but are not limited to, hindered phenols (e.g. IRGANOX^{®} 1010 from Ciba Specialty Chemicals).

The compositions described herein may be employed as a coating for a substrate of interest. The coating may be cured to form a hardcoat top coat. The coating may be applied to a portion of a surface of the substrate or the entire surface of a substrate to be coated. Examples of suitable substrates include, but are not limited to, organic polymeric materials such as acrylic polymers, e.g., poly(methylmethacrylate), polyamides, polyimides, acrylonitrile-styrene copolymer, styrene-acrylonitrile-butadiene terpolymers, polyvinyl chloride, polyethylene, polycarbonates, copolycarbonates, high-heat polycarbonates, metal, glass, a combination of two or more thereof, and any other suitable material.

The coating composition can be applied to a substrate with or without the aid of a primer material. The primer material may be chosen from any material suitable for facilitating adhesion of the topcoat material to the substrate. The primer material is not particularly limited, and may be chosen from any suitable primer material. In one embodiment, the primer is chosen from homo and copolymers of alkyl acrylates, polyurethanes, polycarbonates, polyvinylpyrrolidone, polyvinylbutyrals, poly(ethylene terephthalate), poly(butylene terephthalate), or a combination of two or more thereof. In one embodiment, the primer may be polymethylmethacrylate.

In one embodiment, a primer layer is applied to the substrate prior to applying the coating composition. The primer may be coated onto a substrate by flow coat, dip coat, spin coat, spray coat, or any other methods known to a person skilled in the field, it is allowed to dry by removal of any solvents, for example by evaporation, thereby leaving a dry coating. The primer may subsequently be cured. Additionally, a topcoat (e.g., a hardcoat layer) may be applied on top of the dried primer layer by flow coat, dip coat, spin coat or any other methods known to a person skilled in the field. Optionally, a topcoat layer may be directly applied to the substrate without a primer layer.

In an embodiment, the coated substrates have a critical strain in the range of 1 percent to 10 percent, 1.5 percent to 7 percent, even from 2 percent to 5 percent, as measured at 3-10 micron coating thickness. Here as elsewhere in the specification and claims, numerical values may be combined to form new and non-specified ranges.

The following examples illustrate embodiments of materials in accordance with the disclosed technology. The examples are intended to illustrate embodiments of the disclosed technology, and are not intended to limit the claims or disclosure to such specific embodiments.

### Summary of preferred embodiments

1. A composition comprising:
   Component A of the formula (R¹)_{d}Si(OR²)_{4-d}, wherein R¹ is a C₁-C₃ monovalent hydrocarbon, R² is a C₁-C₃ monovalent hydrocarbon or a hydrogen radical and d is 0, 1, or 2, and
   Component B, is selected from the group consisting of Formula 1, Formula 2, or a combination thereof:

      (R³)ₐSi(OR⁴)₄₋ₐ Formula 1

      (R⁵O)ₘ(R⁶)ₙSi(R⁹)ₓ(R¹⁰)_{y}(R¹¹)_{z}Si(R⁸)ₛ(OR⁷)ₚ Formula 2

      wherein R³ is chosen from a C₅-C₂₀ linear or branched alkyl radical, a C₅-C₂₀ fluoroalkyl, a mixture of hydrocarbon and fluorocarbon chain, C₅-C₂₀ linear or branched hydrocarbon chain containing thioester group, C₆-C₂₄ saturated or unsaturated linear or cyclic hydrocarbon chain containing amino group or urea group, R⁴ is C₁-C₂₀ monovalent hydrocarbon radical or a hydrogen radical; a is 1, 2, or 3;
      R⁵and R⁷ are independently chosen from a C₁-C₂₀ monovalent hydrocarbon radical or a hydrogen radical;
      R⁶ and R⁸ are independently selected from a C₁ to C₃ monovalent hydrocarbon radical or a hydrogen radical; m and p are 1 to 3; n and s are 1 to 3 such that m + n is 3, and s + p is 3;
      R⁹ is chosen from a C₁-C₂₄ divalent hydrocarbon radical;
      R¹⁰ and R¹¹ are independently chosen from C₁ to C₂₄ monovalent hydrocarbon radical;
      x is 1 to 20, y is 0 to 20, and z is 0 to 20;
   metal oxide particles;
   UV absorber;
   a catalyst; and
   a solvent; and optionally comprising additives selected from an antioxidant, a thermal stabilizer, an adhesion promoter, filler, UV absorber, surfactant or a combination of two or more thereof,
   wherein component B is present in an amount of from 10 weight percent to 30 weight percent based on the total weight of the total silane composition.
2. The composition of embodiment 1 , wherein R³ of component B is chosen from pentyl, hexyl, heptyl, octyl, nonyl decyl, dodecyl, 3,3,3-trifluoropentyl, 3,3,3-trifluorohexyl, 3,3,3-trifluoroheptyl, 3,3,3-trifluorooctyl, perfluoropentyl, perfluorohexyl, perfluoroheptyl, or perfluorohexyl.
3. The composition of any of embodiments 1 or 2, wherein R⁴ is chosen from methyl or ethyl.
4. The composition of embodiment 1, wherein component B is chosen from a silane of Formula 2 having the formula 2a:

   (R⁵O)ₘ(R⁶)ₙSi*-*Z-Si(R⁸)ₛ(OR⁷)ₚ 2a

   where Z is a C₁-C₂₄ bivalent hydrocarbon radical.
5. The composition of embodiment 4, wherein the bivalent hydrocarbon radical Z is of the formula -R²¹-R²³-R²²- where R²¹ and R²² are independently C₁-C₆ bivalent hydrocarbon groups, and R²³ is a C₅-C₁₀ bivalent cyclic group, which may be saturated, unsaturated, or aromatic.
6. The composition of any of embodiments 1-5, wherein component A is methyltrimethoxy silane.
7. The composition of any of embodiments 1-6, wherein the metal oxide particles are present in an amount of from 0.1 weight percent to 50 weight percent based on the weight of the composition.
8. The composition of any of embodiments 1-7, wherein the metal oxide particles are chosen from silica, zirconia, titania, alumina, ceria, tin oxide, zinc oxide, antimony oxide, or a combination of two or more thereof.
9. The composition of any of embodiments 1-8, wherein the metal oxide particles have an average particle size of from 1 nm to 250 nm.
10. The composition of any of embodiments 1-9 further comprising additives selected from an antioxidant, a thermal stabilizer, an adhesion promoter, filler, UV absorber, surfactant or a combination of two or more thereof.
11. The composition of any of embodiments 1-10, wherein the solvent is chosen from an aliphatic alcohol, a glycol ether, a cycloaliphatic alcohol, an aliphatic ester, a cycloaliphatic ester, an aliphatic hydrocarbon, a cycloaliphatic hydrocarbon, an aromatic hydrocarbon, a halogenated aliphatic compound, a halogenated cycloaliphatic compound, a halogenated aromatic compound, an aliphatic ether, a cycloaliphatic ether, an amide solvents, a sulfoxide solvent, or a combination of two or more thereof.
12. The composition of any of embodiments 1-11, wherein the catalyst is at least one member selected from the group consisting of tetra-n-butylammonium acetate, tetra-n-butylammonium formate, tetra-n-butylammonium benzoate, tetra-n-butylammonium-2-ethylhexanoate, tetra-n-butylammonium-p-ethylbenzoate, tetra-n-butylammonium propionate and TBD-acetate ( acetate of 1,5,7-triazabicyclo[4.4.0]dec-5-ene (TBD)).
13. A coating forming composition comprising the composition of any of embodiments 1-12, wherein the coating forming composition is applied to a substrate, said substrate selected from an acrylic polymer, a polyamide, a polyimide, an acrylonitrile-containing polymer, a polyvinyl halide, a polyolefin, a polycarbonate, or a copolycarbonate, a metal, a glass, or a combination of two or more thereof.
14. An article comprising a substrate and a coating formed from a composition covering at least a portion of said substrate, the coating composition comprising
   Component A of the formula (R¹)_{d}Si(OR²)_{4-d}, wherein R¹ is a C₁-C₃ monovalent hydrocarbon, R² is a C₁-C₃ monovalent hydrocarbon or a hydrogen radical and d is 0, 1, or 2, and
   Component B is selected from the group consisting of at least one of formula 1 or 2:

      (R³)ₐSi(OR⁴)₄₋ₐ Formula 1

      (R⁵O)ₘ(R⁶)ₙSi(R⁹)ₓ(R¹⁰)_{y}(R¹¹)_{z}Si(R⁸)ₛ(OR⁷)ₚ Formula 2

      wherein R³ is chosen from a C₅-C₂₀ linear or branched alkyl radical, a C₅-C₂₀ fluoroalkyl, a mixture of hydrocarbon and fluorocarbon chain, C₅-C₂₀ linear or branched hydrocarbon chain containing thioester group, C₆-C₂₄ saturated or unsaturated linear or cyclic hydrocarbon chain containing amino group or urea group, R⁴ is C₁-C₂₀ monovalent hydrocarbon radical or a hydrogen radical; a is 1 to 3; R⁵ and R⁷ are independently chosen from a C₁-C₂₀ monovalent hydrocarbon radical or a hydrogen radical;
      R⁶ and R⁸ are independently selected from a C₁ to C₃ monovalent hydrocarbon radical or a hydrogen radical; m and p are 1 to 3; n and s are 1 to 3 such that m + n is 3, and s + p is 3;
      R⁹ is chosen from a C1-C24 divalent hydrocarbon radical;
      R¹⁰ and R¹¹ are independently chosen from C₁ to C₂₄ monovalent hydrocarbon radical;
      x is 1 to 20, y is 0 to 20, and z is 0 to 20;
   metal oxide particles;
   UV absorber;
   a catalyst; and
   a solvent,
   wherein component B is present in an amount of from 10 weight percent to 30 weight percent based on the total weight of the total silane composition , and wherein the coating composition when cured has a critical strain of 1 to 10 as measured at 3-10 micron coating thickness.
15. The article of embodiment 14, wherein R³ is chosen from pentyl, hexyl, heptyl, octyl, nonyl decyl, dodecyl, 3,3,3-trifluororpentyl, 3,3,3-trifluorohexyl, 3,3,3-trifluoroheptyl, 3,3,3-trifluorooctyl, perfluoropentyl, perfluorohexyl, perfluoroheptyl, or perfluorohexyl.
16. The article of any of embodiments 14 or 15, wherein the R⁴ is chosen from methyl or ethyl.
17. The article of any of embodiments 14-16, wherein the component A is methyltrimethoxy silane.
18. The article of any of embodiments 14-17, wherein the metal oxide particles are present in an amount of from 0.1 weight percent to 50 weight percent based on the weight of the composition.
19. The article of any of embodiments 14-18, wherein the metal oxide particles chosen from silica, zirconia, titania, alumina, ceria, tin oxide, zinc oxide, antimony oxide or a combination of two or more thereof.
20. The article of any of embodiments 14-19, wherein the metal oxide particles have an average particle size of from 1 nm to 250 nm.
21. The article of any of embodiments 14-20, wherein the substrate is chosen from an acrylic polymer, a polyamide, a polyimide, an acrylonitrile-styrene copolymer, a styrene-acrylonitrile-butadiene terpolymer, a polyvinyl halide, a polyethylene, a polycarbonate, a copolycarbonate, a metal, a glass, or a combination of two or more thereof.
22. The article of any of embodiments 14-21 comprising a primer coating disposed between the coating composition and the substrate.
23. A process for forming a coating composition comprising providing:
   (i) Component A of the formula (R¹)_{d}Si(OR²)_{4-d}, wherein R¹ is a C₁-C₃ monovalent hydrocarbon, R² is a C₁-C₃ monovalent hydrocarbon or a hydrogen radical and d is 0, 1, or 2, and
   (ii) Component B, is selected from the group consisting of Formula 1, Formula 2, or a combination thereof:

      (R³)ₐSi(OR⁴)₄₋ₐ Formula 1

      (R⁵O)ₘ(R⁶)ₙSi(R⁹)ₓ(R¹⁰)_{y}(R¹¹)_{z}Si(R⁸)ₛ(OR⁷)ₚ Formula 2

      wherein R³ is chosen from a C₅-C₂₀ linear or branched alkyl radical, a C₅-C₂₀ fluoroalkyl, a mixture of hydrocarbon and fluorocarbon chain, C₅-C₂₀ linear or branched hydrocarbon chain containing thioester group, C₆-C₂₄ saturated or unsaturated linear or cyclic hydrocarbon chain containing amino group or urea group, R⁴ is C₁-C₂₀ monovalent hydrocarbon radical or a hydrogen radical; a is 1, 2 or 3;
      R⁵and R⁷ are independently chosen from a C₁-C₂₀ monovalent hydrocarbon radical or a hydrogen radical;
      R⁶ and R⁸ are independently selected from a C₁ to C₃ monovalent hydrocarbon radical or a hydrogen radical; m and p are 1 to 3; n and s are 1 to 3 such that m + n is 3, and s + p is 3;
      R⁹ is chosen from a C₁-C₂₄ divalent hydrocarbon radical;
      R¹⁰ and R¹¹ are independently chosen from C₁ to C₂₄ monovalent hydrocarbon radical;
      x is 1 to 20, y is 0 to 20, and z is 0 to 20;
   (iii) metal oxide particles;
   (iv) UV absorber;
   (v) a catalyst; and
   (vi) a solvent; and mixing (i)-(vi) to form a composition
   wherein component B is present in an amount of from 10 weight percent to 30 weight percent based on the total weight of the total silane composition.
24. A method for forming a coated article comprising applying a coating composition to a surface of a substrate of an article, wherein the coating composition comprises:
   Component A of the formula (R¹)_{d}Si(OR²)_{4-d}, wherein R¹ is a C₁-C₃ monovalent hydrocarbon, R² is a C₁-C₃ monovalent hydrocarbon or a hydrogen radical and d is 0, 1, or 2, and
   Component B, is selected from the group consisting of Formula 1, Formula 2, or a combination thereof:

      (R³)ₐSi(OR⁴)₄₋ₐ Formula 1

      (R⁵O)ₘ(R⁶)ₙSi(R⁹)ₓ(R¹⁰)_{y}(R¹¹)_{z}Si(R⁸)ₛ(OR⁷)ₚ Formula 2

      wherein R³ is chosen from a C₅-C₂₀ linear or branched alkyl radical, a C₅-C₂₀ fluoroalkyl, a mixture of hydrocarbon and fluorocarbon chain, C₅-C₂₀ linear or branched hydrocarbon chain containing thioester group, C₆-C₂₄ saturated or unsaturated linear or cyclic hydrocarbon chain containing amino group or urea group, R⁴ is C₁-C₂₀ monovalent hydrocarbon radical or a hydrogen radical; a is 01, 2, or 3;
      R⁵and R⁷ are independently chosen from a C₁-C₂₀ monovalent hydrocarbon radical or a hydrogen radical;
      R⁶ and R⁸ are independently selected from a C₁ to C₃ monovalent hydrocarbon radical or a hydrogen radical; m and p are 1 to 3; n and s are 1 to 3 such that m + n is 3, and s + p is 3;
      R⁹ is chosen from a C₁-C₂₄ divalent hydrocarbon radical;
      R¹⁰ and R¹¹ are independently chosen from C₁ to C₂₄ monovalent hydrocarbon radical;
      x is 1 to 20, y is 0 to 20, and z is 0 to 20;
   metal oxide particles;
   UV absorber;
   a catalyst; and
   a solvent, wherein component B is present in an amount of from 10 weight percent to 30 weight percent based on the total weight of the total silane composition.
25. The method of embodiment 24, wherein the coating composition is applied by a coating deposition method selected from spray, dip, flow, spin.

### EXAMPLES

### Comparative Example-1 (CE-1)

A small glass bottle was charged with acetic acid (2.71 g) and methyl trimethoxy silane (MTMS, 35.21 g), the mixture was then chilled in an ice bath. A mixture of silica (LUDOX^{®} AS-40,14.16 g) and water was then added over approximately 20 minutes to the chilled mixture of silane and acetic acid mixture. The mixture heated slightly due to the exothermic reaction of the silane hydrolysis and was allowed to stir over several hours while it cooled back to room temperature. Next, a mixture of IPA (Isopropyl alcohol) and n-BuOH (n-Butanol) was added and mixed for approximately 30 minutes. 4,6-dibenzoyl-2-(3-triethoxysilylpropyl) resorcinol (SDBR) was then added to the hydrolysis mixture (2.82 g, 32% SDBR in 1-methoxy-2-proanol solution) and stirring was continued until the SDBR was dispersed. The reaction mixture was allowed to stir and mix for another day. A 40% solution of tetrabutylammonium acetate (TBAA) in water (0.1 g) and BYK^{®} 302 (0.05 g) were added. The formulation was then aged sufficiently before being applied as top coat.

### Comparative Example 2 (CE-2)

A small glass bottle was charged with acetic acid (2.71 g) and MTMS (33.45 g) and n-butyl trimethoxy silane (1.76 g), the mixture was then chilled in an ice bath. A mixture of silica (LUDOX^{®} AS-40, 14.16 g) and water was then added over approximately 20 minutes to the chilled mixture of silane and acetic acid mixture. The mixture heated slightly due to the exothermic reaction of the silane hydrolysis and was allowed to stir over several hours while it cooled back to room temperature. Next a mixture of IPA (Isopropyl alcohol) and n-BuOH (n-Butanol) was added and mixed for approximately 30 minutes. SDBR was then added to the hydrolysis mixture (2.82 g, 32% SDBR in 1-methoxy-2-proanol solution) and stirring was continued until the SDBR was dispersed. The reaction mixture was allowed to stir and mix for another day. A 40% solution of TBAA in water (0.1 g) and BYK^{®} 302 (0.05 g) were added. The formulation was then aged sufficiently before being applied as top coat.

### Comparative Example 3 (CE-3)

A small glass bottle was charged with acetic acid (2.71 g) and MTMS (31.69 g) and 3,3,3-trifluoropropyl trimethoxy silane (3.52 g), the mixture was then chilled in an ice bath. A mixture of silica (LUDOX^{®} AS-40, 14.16 g) and water was then added over approximately 20 minutes to the chilled mixture of silane and acetic acid mixture. The mixture heated slightly due to the exothermic reaction of the silane hydrolysis and was allowed to stir over several hours while it cooled back to room temperature. Next a mixture of IPA (Isopropyl alcohol) and n-BuOH (n-Butanol) was added and mixed for approximately 30 minutes. SDBR was then added to the hydrolysis mixture (2.82 g, 32% SDBR in 1-methoxy-2-proanol solution) and stirring was continued until the SDBR was dispersed. The reaction mixture was allowed to stir and mix for another day. A 40% solution of TBAA in water (0.1 g) and BYK^{®} 302 (0.05 g) were added. The formulation was then aged sufficiently before being applied as top coat.

### Comparative example 4 (CE-4)

A cerium oxide - siloxanol hydrolysate was prepared by charging 22.41g of the cerium oxide sol (Sigma Aldrich, 20Wt% solids, 2.5wt% acetic acid stabilized, aqueous) to an Erlenmeyer flask and 20.96g of MTMS was then added to the chilled cerium oxide sol over 20 minutes. The mixture heated slightly due to the exothermic reaction of the silane hydrolysis and was allowed to stir over several hours while it cooled back to room temperature. The hydrolysate was then diluted by adding 19g of n-Butanol. The hydrolysate was aged by allowing it to stand for three days at room temperature.

A colloidal silica - siloxanol hydrolysate was prepared by charging 27.64g of colloidal silica sol (Nalco 1034A, 34.7Wt% solids, aqueous) to an Erlenmeyer flask and 13.58g of MTMS was then added to the chilled SiO₂ sol over 20 minutes while stirring the mixture. The mixture heated slightly due to the exothermic reaction of the silane hydrolysis and was allowed to stir over several hours while it cooled back to room temperature. The hydrolysate was then diluted by adding 30g of iso-propanol. The hydrolysate was aged by allowing it to stand for three days at room temperature.

The cerium oxide containing hydrolysate and colloidal silica containing hydrolysate were then combined and stirred to completely mix them. 39g of n-Butanol was added to 130g of the ceria -silica hydrolysate mixture. The mixture was stripped of ~ 41g of the solvent by vacuum distillation at 50mbar and 70°C. The pH of the formulation was then adjusted to 5.1 by adding NH₃ solution. To the CeO₂/SiO₂ siloxanol hydrolysate mixture was then added 0.3g of 10% solution of flow control agent BYK^{®} 302 polyether modified polydimethylsiloxane. The solid content of the formulation was measure to be 24.71%. Finally, 0.062g of 1, 5, 7-Triazabicyclo [4.4.0] dec-5-ene was added as a cure catalyst to the formulation. The formulation was sufficiently aged prior to use as top coat.

### Comparative Example 5 (CE-5)

A small glass bottle was charged with acetic acid (2.71 g) and methyl trimethoxy silane (30.18 g, MTMS). A mixture of silica (18.67 g, LUDOX^{®} AS-40 40) and water was added to the chilled mixture of silane with acetic acid over approximately 20 minutes. The mixture was allowed to stir over several hours while cooled back to room temperature. Next a mixture of IPA (Isopropyl alcohol) and n-BuOH (n-Butanol) was added and mixed for approximately 30 minutes. Silanated hydroxybenzophenone (2.76 g, SHBP) was added after that and continued to mix. The reaction mixture was allowed to stir and mix for another day. A 40% solution of TBAA in water (0.09 g) and BYK^{®} 302 (0.12 g) and acrylic polyol (0.88 g) were added. This formulation was aged sufficiently before being applied as top coat.

### Example 1

A small glass bottle was charged with acetic acid (2.71 g) and MTMS (31.69 g) and Octyl triethoxy silane (3.52 g, Silquest^{™} A-137 from Momentive Performance Materials Inc.), the mixture was then chilled in an ice bath. A mixture of silica (LUDOX^{®} AS-40, 14.16 g) and water was then added over approximately 20 minutes to the chilled mixture of silane / acetic acid mixture. The mixture heated slightly due to the exothermic reaction of the silane hydrolysis and it cooled back was allowed to stir over several hours while it cooled back down to room temperature. Next a mixture of IPA (Isopropyl alcohol) and n-BuOH (n-Butanol) was added and mixed for approximately 30 minutes. SDBR was then added to the hydrolysis mixture (2.82 g, 32% SDBR in 1-methoxy-2-proanol solution) and stirring was continued until the SDBR was dispersed. The reaction mixture was allowed to stir and mix for another day. A 40% solution of TBAA in water (0.1 g) and BYK^{®} 302 (0.05 g) were added. The formulation was then aged sufficiently before being applied as top coat.

Examples 2-3 were prepared using a similar procedure as described with respect to Example 1 by varying the ratio of MTMS and Octyl triethoxy silane
Example 4-5 were prepared using a similar procedure as described with respect to Example 1, except that Dodecyl triethoxy silane was used in place of Octyl triethoxy silane.

### Example 6

Example 6 was prepared using a similar procedure as described with respect to Example 1, except that part of MTMS was replaced with tetraethoxy silane , and Dodecyl triethoxy silane was used in place of Octyl triethoxy silane.

### Example 7

Example 7 was prepared using a similar procedure as described with respect to Example 1, except that 1,8-Bis (Triethoxy silyl) Octane was used in place of Octyl triethoxy silane.

### Example 8

Example 8 was prepared using a similar procedure as described with respect to Example 1, except that Nonafluorohexyl trimethoxysilane was used in place of Octyl triethoxy silane.

### Example 9 (not according to the invention)

A cerium oxide - siloxanol hydrolysate was prepared by charging 22.41g of the cerium oxide sol (Sigma Aldrich, 20Wt% solids, 2.5wt% acetic acid stabilized, aqueous) to an Erlenmeyer flask and 18.89g of MTMS was then added to the chilled cerium oxide sol over 20 minutes. 1.73g of Octyl triethoxysilane (Silquest^{™} A137, Momentive Performance Materials Pvt. Ltd) was added in drops after the addition of MTMS. The mixture heated slightly due to the exothermic reaction of the silane hydrolysis and was allowed to stir over several hours while it cooled back to room temperature. . The hydrolysate was then diluted by adding 19g of n-Butanol. The hydrolysate was aged by allowing it to stand for three days at room temperature.

A colloidal silica - siloxanol hydrolysate was prepared by charging 27.64g of colloidal silica sol (Nalco^{®} 1034A, 34.7Wt% solids, aqueous) to an Erlenmeyer flask and 13.58g of MTMS was then added to chilled SiO₂ sol over 20 minutes. 1.24g of Octyl triethoxysilane (A137, Momentive Performance Materials Pvt. Ltd) was added in drops after the addition of MTMS. The mixture heated slightly due to the exothermic reaction of the silane hydrolysis and was allowed to stir over several hours while it cooled back to room temperature. The hydrolysate was then diluted by adding 30g of iso-propanol. The hydrolysate was aged by allowing it to stand for three days at room temperature.

The cerium oxide containing hydrolysate and colloidal silica containing hydrolysate were then combined and stirred to completely mix them. 37g of n-Butanol was added to 130g of the ceria -silica hydrolysate mixture. The mixture was stripped off 36.45g of the solvent by vacuum distillation at 50mbar and 70°C to get 127.89g of formulation. The pH of the formulation was then adjusted to 5.1 by adding NH₃ solution. To the CeO₂/SiO₂ siloxanol hydrolysate mixture was then added 0.4g of 1% solution of flow control agent BYK^{®} 302 polyether modified polydimethylsiloxane. The solid content of the formulation was measure to be 21.99%. Finally, 0.059g of 1,5,7-Triazabicyclo[4.4.0]dec-5-ene was added as a cure catalyst to the formulation. The formulation was then aged sufficiently before being applied as top coat.

### Example 10

A small glass bottle was charged with acetic acid (2.71 g) and methyl trimethoxy silane (24.14 g, MTMS) and Octyl triethoxy silane (6.04 g, Silquest^{™} A-137 from Momentive Performance Materials Inc.). A mixture of silica (18.67 g, LUDOX^{®} AS-40) and water was added to the chilled mixture of silane with acetic acid over approximately 20 minutes. The mixture was allowed to stir over several hours while cooling back to room temperature. Next the mixture of alcohol solvent was added and mixed for approximately 30 minutes. Silylated hydroxybenzophenone (2.76 g, SHBP) was added after that and continued to mix. TBAA (0.09 g) and BYK^{®} 302 (0.12 g) and acrylic polyol (0.88 g) were added. This formulation was aged sufficiently before being applied as top coat.

Coating formulations prepared in Comparative example 5 and example 10 were applied directly on polymeric substrate.

Tables 1 provides formulations for the coating compositions.

**Table 1: Coating formulation compositions**

| | | **Weight (g)** | | | | | | | | | | | | | | |
|---|---|---|---|---|---|---|---|---|---|---|---|---|---|---|---|---|
| **Components** | | **CE-1** | **CE-2** | **CE-3** | **CE-4** | **CE-5** | **Ex-1** | **Ex-2** | **Ex-3** | **Ex-4** | **Ex-5** | **Ex-6** | **Ex-7** | **Ex-8** | **Ex-9*** | **Ex-10** |
| Acetic Acid | 3a | 2.71 | 2.71 | 2.71 | | 2.71 | 2.71 | 2.71 | 2.71 | 2.71 | 2.71 | 2.71 | 2.71 | 2.71 | | 2.71 |
| Methyltrimethoxysilane | 1a | 35.21 | 33.45 | 31.69 | 34.54 | 30.18 | 31.69 | 28.17 | 24.65 | 31.69 | 28.2 | 28.2 | 31.7 | 31.7 | 32.47 | 24.14 |
| TEOS | 1b | | | | | | | | | | | 1.4 | | | | |
| Octyl Triethoxy silane (SILQUEST^{™} A-137) | 2a | | | | | | 3.52 | 7.04 | 10.56 | | | | | | 2.97 | 6.04 |
| Dodecyl triethoxy silane | 2b | | | | | | | | | 3.52 | 7.04 | 5.3 | | | | |
| n-butyl trimethoxy silane | 2c | | 1.76 | | | | | | | | | | | | | |
| 3,3,3-trifluropropyl trimethoxy silane | 2d | | | 3.52 | | | | | | | | | | | | |
| Nonafluorohexyl trimethoxysilane | 2e | | | | | | | | | | | | | 3.52 | | |
| 1,8-Bis (Triethoxy silyl) Octane | 2f | | | | | | | | | | | | 3.52 | | | |
| Ludox^{®} AS40 | 4a | 14.16 | 14.16 | 14.16 | | 18.67 | 14.16 | 14.16 | 14.16 | 14.16 | 14.16 | 14.16 | 14.16 | 14.16 | | 18.67 |
| Nalco^{®} 103 | | | | | 27.64 | | | | | | | | | | 27.64 | |
| Cerium oxide | 4b | | | | 22.41 | | | | | | | | | | 22.41 | |
| Additional Water | *5* | 12.52 | 12.52 | 12.52 | | *5.55* | 12.52 | 12.52 | 12.52 | 12.52 | 12.52 | 12.52 | 12.52 | 12.52 | | *5.55* |
| Iso-propanol | 6 | 16.52 | 16.52 | 16.52 | 30.00 | 18.87 | 16.52 | 16.52 | 16.52 | 16.52 | 16.52 | 16.52 | 16.52 | 16.52 | 30 | 18.87 |
| n-butanol | 7 | 16.31 | 16.31 | 16.31 | 58.00 | 21.27 | 16.31 | 16.31 | 16.31 | 16.31 | 16.31 | 16.31 | 16.31 | 16.31 | 56 | 21.27 |
| Acetic Acid | | | | | | | | | | | | | | | | |
| SDBR Solution | 9 | 2.82 | 2.82 | 2.82 | | | 2.82 | 2.82 | 2.82 | 2.82 | 2.82 | 2.82 | 2.82 | 2.82 | | |
| SHBP | 11 | | | | | 2.76 | | | | | | | | | | 2.76 |
| BYK^{®}302 | 8 | 0.05 | 0.05 | 0.05 | 0.03 | 0.12 | 0.05 | 0.05 | 0.05 | 0.05 | 0.05 | 0.05 | 0.05 | 0.05 | 0.03 | 0.12 |
| Tetrabutylammonium Acetate (TBAA) | 3b | 0.1 | 0.1 | 0.1 | | 0.09 | 0.1 | 0.1 | 0.1 | 0.1 | 0.1 | 0.1 | 0.1 | 0.1 | | 0.09 |
| 1,5,7-Triazabicyclo[4.4.0]dec-5-ene (TBD) | 3c | | | | 0.062 | | | | | | | | | | 0.059 | |
| Acrylic polyol | 10 | | | | | 0.88 | | | | | | | | | | 0.88 |

| | | | | | | | | | | | | | | | | |
|---|---|---|---|---|---|---|---|---|---|---|---|---|---|---|---|---|
| *: not according to the invention | | | | | | | | | | | | | | | | |

### Preparation of Primer Formulation

Primer formulations were prepared by mixing a Polymethyl methacrylate PMMA, solvent and a flow control agent. The PMMA solutions were prepared by dissolving PMMA resin (7gm) in 93g of a mixture of 1-methoxy-2-propanol (85 wt. %) and diacetone alcohol (15 wt. %) at 50 deg C in a glass bottle for >17 hrs. BYK^{®} 331 (0.03 %) flow additive was added to the above mixture. This primer solution was used for coating on polycarbonate.

### Preparation of Coated Polycarbonate Panels

Silicone coating formulations in Table 1 were coated on polycarbonate plates according to the following procedure. Polycarbonate (PC) plaques (6 x 6 x 0.3 cm) were cleaned with a stream of N₂ gas to remove any dust particles adhering to the surface followed by rinsing of the surface with isopropanol. The plates were then allowed to dry inside the fume hood for 20 minutes. The primer solutions were then applied to the PC plates by flow coating. The solvent in the primer coating solutions were allowed to flash off in the fume hood for approximately 20 minutes (22 °C, 37 % RH) and then put in an oven for 125 °C for 45 minutes. After cooling to room temperature, the primed PC plates were then flow coated with the silicone coating solution. After drying for approximately 20 minutes (22 °C, 37% RH), the coated plates were placed in a preheated circulated air oven at 130 °C for 45 minutes.

### Measurement of Coating Properties

The optical characteristics (Transmission and Haze) were measured using a BYK Gardner haze guard instrument. Measurements were made according to ASTM D1003.

Coating should have transmittance value of more than >85% and haze should be <1. Adhesion was measured using a cross hatch adhesion test according to ASTM D3200/D3359.

The adhesion is rated on a scale of 5B-0B, with 5B indicative of the highest adhesion. Adhesion after water immersion was done by immersing the coated PC plates in 65 °C water followed by cross hatch adhesion test at different time intervals.

Steel wool abrasion tests were performed by rubbing grade 0000 steel wool under a weight of 1 Kg on the surface of the coated substrate. The initial haze (Hᵢ) of the coated sample was measured prior to steel wool abrasion then again after rubbing back and forth 5 times (H_{f}). The ΔHaze (ΔH) was calculated as, ΔH = H_{f} - Hᵢ.

Taber abrasion testing was done in accordance with ASTM D1003 and D1044, haze measurements were made using a BYK haze-gard, ΔH values at 500 cycles were recorded. A minimum of four specimens of each experimental sample were tested, the average ΔH(500) is reported.

### Critical Strain Measurement:

Testing was performed on an Instron model #5565, run in tensile mode, with a crosshead speed of 5 mm/min. Critical strain measurements were obtained through the use of a noncontact digital extensometer with video capture and playback. The extensometer was capable of recording precise measurements of the strain experienced by the sample under load and correlating the video frames to the instantaneous strain on the sample. A critical strain value was obtained by reviewing the video playback of the test once completed to identify the strain at which the cracks began to propagate beyond a nominal distance of 1mm. Critical strain was reported as measured at 3-10 micron coating thickness. The critical strain values have been reported with a standard deviation of 5 percent.

### Nanoindentation Testing:

A Hysitron TI950 Triboindenter with Berkovich tip was used for all nanomechanical measurements reported here. Quasi-static testing was performed to measure the Young's modulus (E) of the coatings. Quasi-static nanoindentation testing was done to obtain reduced modulus values for all of the samples. The nano-DMA experiment was built from a standard frequency sweep program with frequency range from 10-200 Hz. Indents were spaced 10 microns apart. The contact depth was targeted to 5.0 ± 0.1% of total coating thickness. Dynamic testing by nano-DMA was performed to measure the storage modulus (E'), loss modulus (E") and tangent delta values (E"/E') of the coatings. High loss modulus and tangent delta values indicate the improved ability of the coating to dissipate energy.

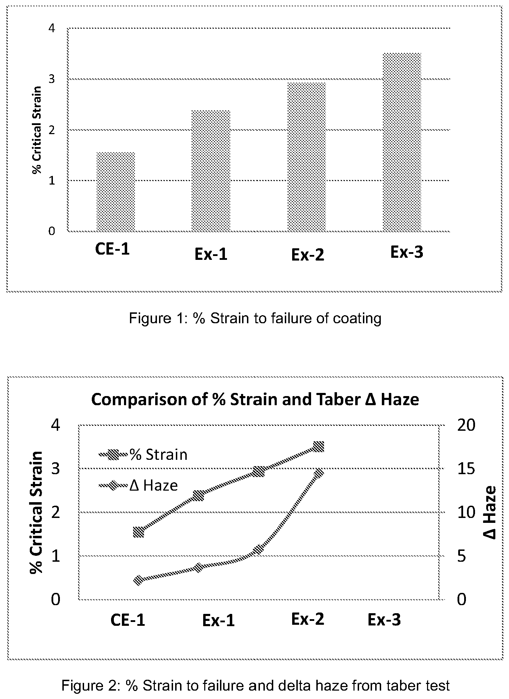

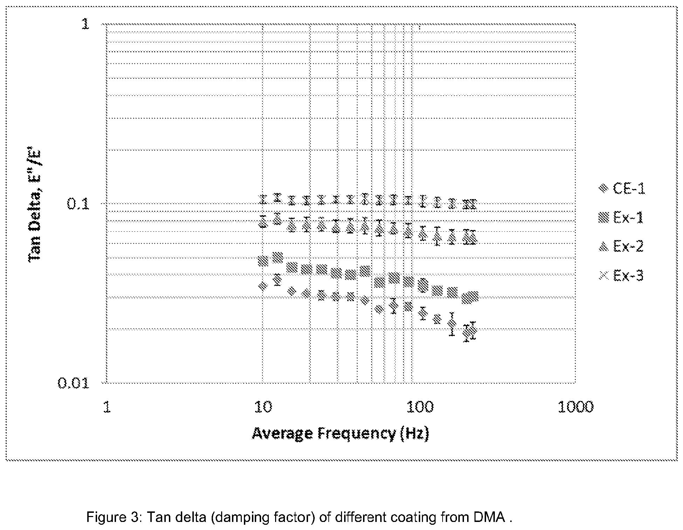

Properties of the coatings are measured for all the new formulation and presented in Table 2. The coatings maintain very good optical clarity and adhesion with the addition of the component Bs. By introducing the component B with the longer chain (e.g., SILQUEST^{™} A-137 silane) the percent strain to failure is improved by >50% as shown in Figure 1. Figure 2 shows the comparison of abrasion resistance with increasing the concentration of the long chain-containing silanes. Abrasion resistance is represented in terms of delta haze after Taber test of 500 cycles. With an increase of the flexible component B, abrasion resistance is affected. Lower delta haze represents better abrasion resistance. With up to 20 wt% of the present component B, abrasion is less affected and delta haze is <10 %. Also with an increase in component B, damping factor increases as shown in Figure 3, which indicates that the crack resistance property of the coating is improved.

**Table 2: Properties of coating**

| | % T Transmitta nce | Haze | Initial Adhesion | Primer Coating Thickness(µm) | Top Coat Thickness (µm) | Δ haze After Steel Wool Test |
|---|---|---|---|---|---|---|
| CE-1 | 91.9 | 0.17 | 5B | 1.5-2.1 | 4.6-6.5 | 0.49 |
| CE-2 | 89.3 | 0.3 | 5B | 2.2-3.2 | 4.3-5.4 | 0.1 |
| CE-3 | 90 | 0.37 | 5B | 2.2-3.2 | 3.9-5.3 | 0.16 |
| CE-4 | 89.4 | 0.54 | 5B | 2.2-3.3 | 4.5-6.5 | - |
| Ex-1 | 91.9 | 0.17 | 5B | 1.5-2.1 | 4.6-6.5 | 0.51 |
| Ex-2 | 91.9 | 0.17 | 5B | 1.5-2.1 | 4.6-6.5 | 0.55 |
| Ex-3 | 91.9 | 0.17 | 5B | 1.5-2.1 | 4.6-6.5 | 2.8 |
| Ex-4 | 89.7 | 0.26 | 5B | 1.9-2.8 | 4-5.8 | 0.33 |
| Ex-5 | 89.7 | 0.45 | 5B | 1.9-2.8 | 4.2-6.1 | 0.79 |
| Ex-6 | 90.3 | 0.42 | 5B | 1.9-2.8 | 4.4-6.5 | 0.07 |
| Ex-7 | 89.8 | 0.31 | 5B | 1.35-2.02 | 5.4-8.5 | 0.47 |
| Ex-8 | 89.5 | 0.56 | 5B | 1.39-2.05 | 3.5-4.5 | TBD |
| Ex-9* | 89.5 | 0.59 | 5B | 2.28-3.76 | 3.48-5.36 | - |
| Ex-10 | 89.2 | 0.47 | 5B | NA | 4.07-6.5 | - |

| | | | | | | |
|---|---|---|---|---|---|---|
| *: not according to the invention | | | | | | |

**Table 3a: Mechanical Properties of Coating**

| Sample | Critical strain (%) |
|---|---|
| CE-1 | 1.55 |
| CE-2 | 1.44 |
| CE-3 | 1.31 |
| Ex-1 | 2.38 |
| Ex-2 | 2.93 |
| Ex-3 | 3.51 |
| Ex-4 | 2.02 |
| Ex-5 | 2.77 |
| Ex-10 | 1.89 |

**Table 3b: Mechanical Properties of Coating**

| Sample | Critical strain (%) |
|---|---|
| CE-4 | 4.01 |
| Ex-9* | 4.76 |

| | |
|---|---|
| *:not according to the invention | |

**Table 4: Modulus of Coating on Primer/PC**

| | E (GPa) | Stdev E (GPa) |
|---|---|---|
| CE-1 | 3.07 | 0.080 |
| Ex-1 | 2.80 | 0.031 |
| Ex-2 | 1.92 | 0.097 |
| Ex-3 | 1.14 | 0.066 |

To understand the effect of microstructure on these newly developed coating, formulations from Example 1 and 2 were aged under different condition, which reflects the degree of cross-linking in the cured material. Coating properties of these aged formulations were evaluated. All these formulations were stable. Different properties of the coatings are presented in Tables 5 and 6.

**Table 5: Properties of Coating**

| **Samples** | **Aging time** | **Δ haze Taber- 500cy** | **E (Gpa)** | **% Strain** |
|---|---|---|---|---|
| CE-1 | 6 d | 2.22 | 3.07 | 1.55 |
| Ex-1 | 6 d | 3.66 | 2.8 | 2.38 |
| Ex-2 | 6 d | 5.75 | 1.92 | 2.93 |
| Ex-3 | 6 d | 14.45 | 1.14 | 3.51 |

**Table 6: Properties of Coating with different aging time at 50 ° C**

| | **Aging Time (days)** | **% T** | **Haze** | **Primer L (µm)** | **Top Coat L (µm)** | **Δ haze (steel wool test)** | **Adhesion** | **65 °C Water Soak, 30 days** |
|---|---|---|---|---|---|---|---|---|
| CE-1 | 3-4 | 89.6 | 0.12 | 2.24-2.89 | 4.61-6.39 | 0.4 | 5B | 5B |
| | 7-8 | 89.6 | 0.17 | 2.07-2.78 | 4.24-6.73 | 0.19 | 5B | 5B |
| | 15-16 | 89.6 | 0.27 | 2.32-2.99 | 4.77-6.66 | 0.56 | 5B | 5B |
| Ex-1 | 3-4 | 89.5 | 0.26 | 2.34-2.97 | 4.7-5.78 | 0.44 | 5B | 5B |
| | 7-8 | 89.5 | 0.14 | 2.26-2.78 | 4.9-6.09 | 0.36 | 5B | 5B |
| | 15-16 | 89.5 | 0.35 | 2.23-2.79 | 4.44-6.19 | 0.38 | 5B | 5B |
| Ex-2 | 3-4 | 91.9 | 0.17 | 1.99-2.63 | 4.6-6.29 | 0.11 | 5B | 5B |
| | 7-8 | 89.3 | 0.36 | 2.06-2.81 | 4.70-6.83 | 0.04 | 5B | 5B |
| | 15-16 | 89.5 | 0.25 | 2.12-2.87 | 5.03-5.85 | 0.22 | 3B | 3B |

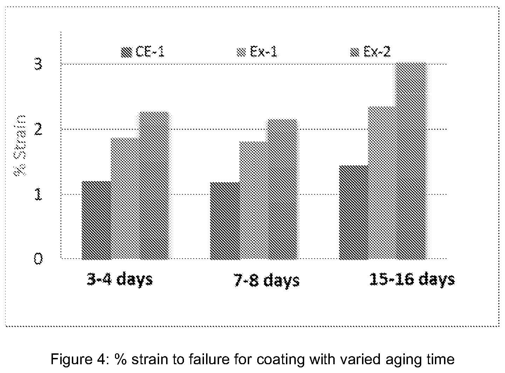

Mechanical properties of all these coatings were evaluated and aspects are shown in Figures 1-6. These coatings further confirmed with repeatability that by adding the second component in accordance with aspects of the disclosure, the percent strain to failure was improved and also the damping factor. The degree of condensation (aging) is characterized by the T³/T² ratio wherein T³ represents the number of silcon atoms in the siloxanol polymer that have three siloxane bonds, having condensed with three other alkoxysilane or silanol species. T² represents the number of silicon atoms in the siloxanol polymer that have two siloxane bonds, having condensed with other with two other alkoxysilane or silanol species and one alkoxy or hydroxy group remaining. The T³/T² ratio can range from 0 (no condensation) to ∞ (complete condensation). The T³/T² for siloxanol resin based coating solutions is preferably 0.2 to 3.0, and more preferably from 0.6 to 2.5. It is clear that for all the different of aging time, by increasing the concentration of the second component in accordance with aspects of the disclosure, the percent strain to failure also improved. Figure 5 shows the percent strain to failure for varied silane content for different aging time (Table 6). It is confirmed that flexibility of the coating can be improved by adding the second component. Figure 3 shows that the damping factor (which can be correlated to toughness) of the coating also increases with increase in the second component content.

While the above description contains many specifics, these specifics should not be construed as limitations on the scope of the invention, but merely as exemplifications of preferred embodiments thereof. Those skilled in the art may envision many other possible variations that are within the scope of the invention as defined by the claims appended hereto.

## Claims

1. A composition comprising:
Component A of the formula (R¹)_{d}Si(OR²)_{4-d}, wherein R¹ is a C₁-C₃ monovalent hydrocarbon, R² is a C₁-C₃ monovalent hydrocarbon or a hydrogen radical and d is 0, 1, or 2, and
Component B, is selected from the group consisting of Formula 1, Formula 2a, or a combination thereof:
(R³)ₐSi(OR⁴)₄₋ₐ Formula 1
(R⁵O)ₘ(R⁶)ₙSi*-*Z-Si(R⁸)ₛ(OR⁷)ₚ 2a
wherein R³ is chosen from a C₅-C₂₀ linear or branched alkyl radical, a C₅-C₂₀ fluoroalkyl, a mixture of hydrocarbon and fluorocarbon chain, C₅-C₂₀ linear or branched hydrocarbon chain containing thioester group, C₆-C₂₄ saturated or unsaturated linear or cyclic hydrocarbon chain containing amino group or urea group, R⁴ is C₁-C₂₀ monovalent hydrocarbon radical or a hydrogen radical; a is 1, 2 or 3;
R⁵and R⁷ are independently chosen from a C₁-C₂₀ monovalent hydrocarbon radical or a hydrogen radical;
R⁶ and R⁸ are independently selected from a C₁ to C₃ monovalent hydrocarbon radical or a hydrogen radical; m and p are 1 to 3; n and s are 1 to 3 such that m + n is 3, and s + p is 3;
Z is a C₁-C₂₄ bivalent hydrocarbon radical;
metal oxide particles;
UV absorber;
a catalyst; and
a solvent; and optionally comprising additives selected from an antioxidant, a thermal stabilizer, an adhesion promoter, filler, UV absorber, surfactant or a combination of two or more thereof,
wherein component B is present in an amount of from 10 weight percent to 30 weight percent based on the total weight of the total silane composition.

2. The composition of claim 1, wherein R³ of component B is chosen from pentyl, hexyl, heptyl, octyl, nonyl decyl, dodecyl, 3,3,3-trifluoropentyl, 3,3,3-trifluorohexyl, 3,3,3-trifluoroheptyl, 3,3,3-trifluorooctyl, perfluoropentyl, perfluorohexyl, perfluoroheptyl, or perfluorohexyl; and/or wherein R⁴ is chosen from methyl or ethyl.

3. The composition of claim 1, wherein component B is chosen from a silane having the formula 2a:
(R⁵O)ₘ(R⁶)ₙSi*-*Z-Si(R⁸)ₛ(OR⁷)ₚ 2a
where Z is a C₁-C₂₄ bivalent hydrocarbon radical, and wherein the bivalent hydrocarbon radical Z is of the formula -R²¹-R²³-R²²- where R²¹ and R²² are independently C₁-C₆ bivalent hydrocarbon groups, and R²³ is a C₅-C₁₀ bivalent cyclic group, which may be saturated, unsaturated, or aromatic.

4. The composition of any of claims 1-3, wherein component A is methyltrimethoxy silane.

5. The composition of any of claims 1-4, wherein (i) the metal oxide particles are present in an amount of from 0.1 weight percent to 50 weight percent based on the weight of the composition; and/or (ii) the metal oxide particles are chosen from silica, zirconia, titania, alumina, ceria, tin oxide, zinc oxide, antimony oxide, or a combination of two or more thereof; and/or (iii) the metal oxide particles have an average particle size of from 1 nm to 250 nm.

6. The composition of any of claims 1-5, wherein the solvent is chosen from an aliphatic alcohol, a glycol ether, a cycloaliphatic alcohol, an aliphatic ester, a cycloaliphatic ester, an aliphatic hydrocarbon, a cycloaliphatic hydrocarbon, an aromatic hydrocarbon, a halogenated aliphatic compound, a halogenated cycloaliphatic compound, a halogenated aromatic compound, an aliphatic ether, a cycloaliphatic ether, an amide solvents, a sulfoxide solvent, or a combination of two or more thereof.

7. The composition of any of claims 1-6, wherein the catalyst is at least one member selected from the group consisting of tetra-n-butylammonium acetate, tetra-n-butylammonium formate, tetra-n-butylammonium benzoate, tetra-n-butylammonium-2-ethylhexanoate, tetra-n-butylammonium-p-ethylbenzoate, tetra-n-butylammonium propionate and TBD-acetate ( acetate of 1,5,7-triazabicyclo[4.4.0]dec-5-ene (TBD)).

8. An article comprising a substrate and a coating formed from the composition of any of claims 1-7 covering at least a portion of said substrate,
wherein the coating composition when cured has a critical strain of 1 to 10 as measured at 3-10 micron coating thickness.

9. The article of any of claim 8, wherein the substrate is chosen from an acrylic polymer, a polyamide, a polyimide, an acrylonitrile-styrene copolymer, a styrene-acrylonitrile-butadiene terpolymer, a polyvinyl halide, a polyethylene, a polycarbonate, a copolycarbonate, a metal, a glass, or a combination of two or more thereof.

10. The article of claim 8 or 9 comprising a primer coating disposed between the coating composition and the substrate.

11. A process for forming a coating composition comprising providing:
(i) Component A of the formula (R¹)_{d}Si(OR²)_{4-d}, wherein R¹ is a C₁-C₃ monovalent hydrocarbon, R² is a C₁-C₃ monovalent hydrocarbon or a hydrogen radical and d is 0, 1, or 2, and
(ii) Component B, is selected from the group consisting of Formula 1, Formula 2a, or a combination thereof:
(R³)ₐSi(OR⁴)₄₋ₐ Formula 1
(R⁵O)ₘ(R⁶)ₙSi*-*Z-Si(R⁸)ₛ(OR⁷)ₚ 2a
wherein R³ is chosen from a C₅-C₂₀ linear or branched alkyl radical, a C₅-C₂₀ fluoroalkyl, a mixture of hydrocarbon and fluorocarbon chain, C₅-C₂₀ linear or branched hydrocarbon chain containing thioester group, C₆-C₂₄ saturated or unsaturated linear or cyclic hydrocarbon chain containing amino group or urea group, R⁴ is C₁-C₂₀ monovalent hydrocarbon radical or a hydrogen radical; a is 1, 2, or 3;
R⁵and R⁷ are independently chosen from a C₁-C₂₀ monovalent hydrocarbon radical or a hydrogen radical;
R⁶ and R⁸ are independently selected from a C₁ to C₃ monovalent hydrocarbon radical or a hydrogen radical; m and p are 1 to 3; n and s are 1 to 3 such that m + n is 3, and s + p is 3;
Z is a C₁-C₂₄ bivalent hydrocarbon radical;
(iii) metal oxide particles;
(iv) UV absorber;
(v) a catalyst; and
(vi) a solvent; and mixing (i)-(vi) to form a composition,
wherein component B is present in an amount of from 10 weight percent to 30 weight percent based on the total weight of the total silane composition.

12. A method for forming a coated article comprising applying a coating composition to a surface of a substrate of an article, wherein the coating composition comprises:
Component A of the formula (R¹)_{d}Si(OR²)_{4-d}, wherein R¹ is a C₁-C₃ monovalent hydrocarbon, R² is a C₁-C₃ monovalent hydrocarbon or a hydrogen radical and d is 0, 1, or 2, and
Component B, is selected from the group consisting of Formula 1, Formula 2a, or a combination thereof:
(R³)ₐSi(OR⁴)₄₋ₐ Formula 1
(R⁵O)ₘ(R⁶)ₙSi*-*Z-Si(R⁸)ₛ(OR⁷)ₚ 2a
wherein R³ is chosen from a C₅-C₂₀ linear or branched alkyl radical, a C₅-C₂₀ fluoroalkyl, a mixture of hydrocarbon and fluorocarbon chain, C₅-C₂₀ linear or branched hydrocarbon chain containing thioester group, C₆-C₂₄ saturated or unsaturated linear or cyclic hydrocarbon chain containing amino group or urea group, R⁴ is C₁-C₂₀ monovalent hydrocarbon radical or a hydrogen radical; a is 1, 2, to 3;
R⁵and R⁷ are independently chosen from a C₁-C₂₀ monovalent hydrocarbon radical or a hydrogen radical;
R⁶ and R⁸ are independently selected from a C₁ to C₃ monovalent hydrocarbon radical or a hydrogen radical; m and p are 1 to 3; n and s are 1 to 3 such that m + n is 3, and s + p is 3;
Z is a C₁-C₂₄ bivalent hydrocarbon radical;
metal oxide particles;
UV absorber;
a catalyst; and
a solvent,
wherein component B is present in an amount of from 10 weight percent to 30 weight percent based on the total weight of the total silane composition.

13. The method of claim 12, wherein the coating composition is applied by a coating deposition method selected from spray, dip, flow, spin.

## Patentansprüche

1. Eine Zusammensetzung, die umfasst:
Komponente A der Formel (R¹)_{d}Si(OR²)_{4-d}, worin R¹ ein einwertiger C₁-C₃-Kohlenwasserstoffrest ist, R² ein einwertiger C₁-C₃-Kohlenwasserstoffrest oder ein Wasserstoffrest ist und d 0, 1 oder 2 ist, und
Komponente B, ausgewählt aus der Gruppe, die aus Formel 1, Formel 2a oder einer Kombination davon besteht:
(R³)ₐSi(OR⁴)₄₋ₐ Formel 1
(R⁵O)ₘ(R⁶)Si-Z-Si(R⁸)ₛ(OR⁷)ₚ 2a
worin R³ aus einem linearen oder verzweigten C₅-C₂₀-Alkylrest, einem C₅-C₂₀-Fluoralkylrest, einem Gemisch aus einer Kohlenwasserstoff- und Fluorkohlenstoffkette, einer linearen oder verzweigten C₅-C₂₀-Kohlenwasserstoffkette, die eine Thioestergruppe enthält, einer gesättigten oder ungesättigten linearen oder cyclischen C₆-C₂₄-Kohlenwasserstoffkette, die eine Aminogruppe oder eine Harnstoffgruppe enthält, ausgewählt ist, R⁴ ein einwertiger C₁-C₂₀-Kohlenwasserstoffrest oder ein Wasserstoffrest ist, a 1, 2 oder 3 ist; R⁵ und R⁷ unabhängig voneinander aus einem einwertigen C₁-C₂₀-Kohlenwasserstoffrest oder einem Wasserstoffrest ausgewählt sind;
R⁶ und R⁸ unabhängig voneinander aus einem einwertigen C₁- bis C₃-Kohlenwasserstoffrest oder einem Wasserstoffrest ausgewählt sind; m und p 1 bis 3 sind; n und s 1 bis 3 sind, so dass m + n 3 ist und s + p 3 ist;
Z ein zweiwertiger C₁₋ bis C₂₄-Kohlenwasserstoffrest ist;
Metalloxidteilchen;
UV-Absorber;
einen Katalysator; und
ein Lösungsmittel; und gegebenenfalls Zusätze, die aus einem Antioxidationsmittel, einem Wärmestabilisator, einem Haftvermittler, einem Füllstoff, einem UV-Absorber, einem Tensid oder einer Kombination von zwei oder mehreren davon ausgewählt sind,
wobei Komponente B in einer Menge von 10 Gew.-% bis 30 Gew.-%, bezogen auf das Gesamtgewicht der gesamten Silanzusammensetzung, vorhanden ist.

2. Die Zusammensetzung gemäß Anspruch 1, wobei R³ der Komponente B aus Pentyl, Hexyl, Heptyl, Octyl, Nonyl, Decyl, Dodecyl, 3,3,3-Trifluorpentyl, 3,3,3-Trifluorhexyl, 3,3,3-Trifluorheptyl, 3,3,3-Trifluoroctyl, Perfluorpentyl, Perfluorhexyl, Perfluorheptyl, oder Perfluorhexyl ausgewählt ist; und/oder wobei R⁴ aus Methyl oder Ethyl ausgewählt ist.

3. Die Zusammensetzung gemäß Anspruch 1, wobei Komponente B aus einem Silan mit der Formel 2a ausgewählt ist:
(R⁵O)ₘ(R⁶)Si-Z-Si(R⁸)ₛ(OR⁷)ₚ 2a
worin Z ein zweiwertiger C₁-C₂₄-Kohlenwasserstoffrest ist, und worin der zweiwertige Kohlenwasserstoffrest Z die Formel -R²¹-R²³-R²²- aufweist, worin R²¹ und R²² unabhängig voneinander zweiwertige C₁-C₆-Kohlenwasserstoffgruppen sind, und R²³ eine zweiwertige cyclische C₅-C₁₀-Gruppe ist, die gesättigt, ungesättigt oder aromatisch sein kann.

4. Die Zusammensetzung gemäß einem der Ansprüche 1-3, wobei Komponente A Methyltrimethoxysilan ist.

5. Die Zusammensetzung gemäß einem der Ansprüche 1-4, wobei (i) die Metalloxidteilchen in einer Menge von 0,1 Gew.-% bis 50 Gew.-%, bezogen auf das Gewicht der Zusammensetzung, vorhanden sind; und/oder (ii) die Metalloxidteilchen aus Siliciumdioxid, Zirkoniumdioxid, Titandioxid, Aluminiumoxid, Ceroxid, Zinnoxid, Zinkoxid, Antimonoxid oder einer Kombination von zwei oder mehreren davon ausgewählt sind; und/oder (iii) die Metalloxidteilchen eine durchschnittliche Teilchengröße von 1 nm bis 250 nm aufweisen.

6. Die Zusammensetzung gemäß einem der Ansprüche 1-5, wobei das Lösungsmittel aus einem aliphatischen Alkohol, einem Glycolether, einem cycloaliphatischen Alkohol, einem aliphatischen Ester, einem cycloaliphatischen Ester, einem aliphatischen Kohlenwasserstoff, einem cycloaliphatischen Kohlenwasserstoff, einem aromatischen Kohlenwasserstoff, einer halogenierten aliphatischen Verbindung, einer halogenierten cycloaliphatischen Verbindung, einer halogenierten aromatischen Verbindung, einem aliphatischen Ether, einem cycloaliphatischen Ether, einem Amid-Lösungsmittel, einem Sulfoxid-Lösungsmittel oder einer Kombination von zwei oder mehreren davon ausgewählt ist.

7. Die Zusammensetzung gemäß einem der Ansprüche 1-6, wobei der Katalysator mindestens eine Verbindung, ausgewählt aus der aus der Gruppe, die aus Tetra-n-butylammoniumacetat, Tetra-n-butylammoniumformiat, Tetra-n-butylammoniumbenzoat, Tetra-n-butylammonium-2-ethylhexanoat, Tetra-n-butylammonium-p-Ethylbenzoat, Tetra-n-butylammoniumpropionat und TBD-Acetat (Acetat von 1,5,7-Triazabicyclo[4.4.0]dec-5-en (TBD)) besteht, ist.

8. Ein Gegenstand, der ein Trägermaterial und eine aus der Zusammensetzung gemäß einem der Ansprüche 1-7 gebildete Beschichtung umfasst, die mindestens einen Teil des Trägermaterials bedeckt,
wobei die Beschichtungszusammensetzung, wenn sie gehärtet ist, eine kritische Dehnung von 1 bis 10 aufweist, gemessen bei einer Beschichtungsdicke von 3-10 Mikrometer.

9. Der Gegenstand gemäß Anspruch 8, wobei das Trägermaterial aus einem Acrylpolymer, einem Polyamid, einem Polyimid, einem Acrylnitril-Styrol-Copolymer, einem Styrol-Acrylnitril-Butadien-Terpolymer, einem Polyvinylhalogenid, einem Polyethylen, einem Polycarbonat, einem Copolycarbonat, einem Metall, einem Glas oder einer Kombination von zwei oder mehreren davon ausgewählt ist.

10. Der Gegenstand gemäß Anspruch 8 oder 9, der eine zwischen der Beschichtungszusammensetzung und dem Trägermaterial angeordnete Grundierungsbeschichtung umfasst.

11. Ein Verfahren zur Bildung einer Beschichtungszusammensetzung, das die Bereitstellung von:
(i) Komponente A der Formel (R¹)_{d}Si(OR²)_{4-d}, worin R¹ ein einwertiger C₁-C₃-Kohlenwasserstoffrest ist, R² ein einwertiger C₁-C₃-Kohlenwasserstoffrest oder ein Wasserstoffrest ist und d 0, 1 oder 2 ist, und
(ii) Komponente B, ausgewählt aus der Gruppe, die aus Formel 1, Formel 2a oder einer Kombination davon besteht:
(R³)ₐSi(OR⁴)₄₋ₐ Formel 1
(R⁵O)ₘ(R⁶)ₙSi-Z-Si(R⁸)ₛ(OR⁷)ₚ 2a
worin R³ aus einem linearen oder verzweigten C₅-C₂₀-Alkylrest, einem C₅-C₂₀-Fluoralkylrest, einem Gemisch aus einer Kohlenwasserstoff- und Fluorkohlenstoffkette, einer linearen oder verzweigten C₅-C₂₀-Kohlenwasserstoffkette, die eine Thioestergruppe enthält, einer gesättigten oder ungesättigten linearen oder cyclischen C₆-C₂₄-Kohlenwasserstoffkette, die eine Aminogruppe oder eine Harnstoffgruppe enthält, ausgewählt ist, R⁴ ein einwertiger C₁-C₂₀-Kohlenwasserstoffrest oder ein Wasserstoffrest ist, a 1, 2 oder 3 ist; R⁵ und R⁷ unabhängig voneinander aus einem einwertigen C₁-C₂₀-Kohlenwasserstoffrest oder einem Wasserstoffrest ausgewählt sind;
R⁶ und R⁸ unabhängig voneinander aus einem einwertigen C₁- bis C₃-Kohlenwasserstoffrest oder einem Wasserstoffrest ausgewählt sind; m und p 1 bis 3 sind; n und s 1 bis 3 sind, so dass m + n 3 ist und s + p 3 ist;
Z ein zweiwertiger C₄-bis C₂₄-Kohlenwasserstoffrest ist;
(iii) Metalloxidteilchen;
(iv) UV-Absorber;
(v) einem Katalysator; und
(vi) einem Lösungsmittel; und das Mischen von (i)-(vi) zur Bildung einer Zusammensetzung umfasst,
wobei Komponente B in einer Menge von 10 Gew.-% bis 30 Gew.-%, bezogen auf das Gesamtgewicht der gesamten Silanzusammensetzung, vorhanden ist.

12. Ein Verfahren zur Bildung eines beschichteten Gegenstands, das das Aufbringen einer Beschichtungszusammensetzung auf eine Oberfläche eines Trägermaterials eines Gegenstands umfasst, wobei die Beschichtungszusammensetzung umfasst:
Komponente A der Formel (R¹)_{d}Si(OR²)_{4-d}, worin R¹ ein einwertiger C₁-C₃-Kohlenwasserstoffrest ist, R² ein einwertiger C₁-C₃-Kohlenwasserstoffrest oder ein Wasserstoffrest ist und d 0, 1 oder 2 ist, und
Komponente B, ausgewählt aus der Gruppe, die aus Formel 1, Formel 2a oder einer Kombination davon besteht:
(R³)ₐSi(OR⁴)₄₋ₐ Formel 1
(R⁵O)ₘ(R⁶)ₙSi-Z-Si(R⁸)ₛ(OR⁷)ₚ 2a
worin R³ aus einem linearen oder verzweigten C₅-C₂₀-Alkylrest, einem C₅-C₂₀-Fluoralkylrest, einem Gemisch aus einer Kohlenwasserstoff- und Fluorkohlenstoffkette, einer linearen oder verzweigten C₅-C₂₀-Kohlenwasserstoffkette, die eine Thioestergruppe enthält, einer gesättigten oder ungesättigten linearen oder cyclischen C₆-C₂₄-Kohlenwasserstoffkette, die eine Aminogruppe oder eine Harnstoffgruppe enthält, ausgewählt ist, R⁴ ein einwertiger C₁-C₂₀-Kohlenwasserstoffrest oder ein Wasserstoffrest ist, a 1, 2 oder 3 ist; R⁵ und R⁷ unabhängig voneinander aus einem einwertigen C₁-C₂₀-Kohlenwasserstoffrest oder einem Wasserstoffrest ausgewählt sind;
R⁶ und R⁸ unabhängig voneinander aus einem einwertigen C₁- bis C₃-Kohlenwasserstoffrest oder einem Wasserstoffrest ausgewählt sind; m und p 1 bis 3 sind; n und s 1 bis 3 sind, so dass m + n 3 ist und s + p 3 ist;
Z ein zweiwertiger C₄-bis C₂₄-Kohlenwasserstoffrest ist;
Metalloxidteilchen;
UV-Absorber;
einen Katalysator; und
ein Lösungsmittel,
wobei Komponente B in einer Menge von 10 Gew.-% bis 30 Gew.-%, bezogen auf das Gesamtgewicht der gesamten Silanzusammensetzung, vorhanden ist.

13. Das Verfahren gemäß Anspruch 12, wobei die Beschichtungszusammensetzung durch ein Beschichtungsverfahren aufgetragen wird, das aus Sprühen, Tauchen, Fließen und Schleudern ausgewählt ist.

## Revendications

1. Une composition comprenant :
un composant A de la formule (R¹)_{d}Si(OR²)_{4-d}, dans laquelle R¹ est un hydrocarbure monovalent en C₁-C₃, R² est un hydrocarbure monovalent en C₁-C₃ ou un radical hydrogène et d est 0, 1 ou 2, et
un composant B, choisi dans le groupe constitué par la formule 1, la formule 2a ou une combinaison de celles-ci :
(R³)ₐSi(OR⁴)₄₋ₐ Formule 1
(R⁵O)ₘ(R⁶)ₙSi-Z-Si(R⁸)ₛ(OR⁷)ₚ 2a
où R³ est choisi parmi un radical alkyle linéaire ou ramifié en C₅-C₂₀, un fluoroalkyle en C₅-C₂₀, un mélange de chaînes hydrocarbonées et fluorocarbonées,
une chaîne hydrocarbonée linéaire ou ramifiée en C₅ à C₂₀ contenant un groupe thioester, une chaîne hydrocarbonée linéaire ou cyclique saturée ou insaturée en C₆ à C₂₄ contenant un groupe amino ou un groupe urée, R⁴ est un radical hydrocarboné monovalent en C₁ à C₂₀ ou un radical hydrogène ; a est 1, 2 ou 3 ;
R⁵ et R⁷ sont indépendamment choisis parmi un radical hydrocarboné monovalent en C₁-C₂₀ ou un radical hydrogène ;
R⁶ et R⁸ sont choisis indépendamment parmi un radical hydrocarboné monovalent en C₁ à C₃ ou un radical hydrogène ; m et p sont compris entre 1 et 3 ; n et s sont compris entre 1 et 3, tels que m + n est égal à 3, et s + p est égal à 3 ;
Z est un radical hydrocarboné bivalent en C1-C24 ;
particules d'oxyde métallique ;
un absorbeur d'UV ;
un catalyseur ; et
un solvant ; et comprenant optionnellement des additifs choisis parmi un antioxydant, un stabilisateur thermique, un promoteur d'adhésion, une charge, un absorbeur d'UV, un agent de surface ou une combinaison de deux ou plusieurs d'entre eux,
où le composant B est présent dans une proportion de 10 à 30 % en poids par rapport au poids total de la composition de silane totale.

2. La composition selon la revendication 1, dans laquelle R³ du composant B est choisi parmi le pentyle, l'hexyle, l'heptyle, l'octyle, le nonyle, le décyle, le dodécyle, le 3,3,3-trifluoropentyle, le 3,3,3-trifluorohexyle, le 3,3,3-trifluoroheptyle, le 3,3,3-trifluorooctyle, le perfluoropentyle, le perfluorohexyle, le perfluoroheptyle, ou le perfluorohexyle ; et/ou dans laquelle R⁴ est choisi parmi le méthyle ou l'éthyle.

3. La composition selon la revendication 1, dans laquelle le composant B est choisi parmi un silane ayant la formule 2a :
(R^{s}O)ₘ(R⁶)ₙSi-Z-Si(R^{s})ₛ(OR⁷)ₚ 2a
où Z est un radical hydrocarboné bivalent en C₁-C₂₄, et où le radical hydrocarboné bivalent Z est de la formule -R²¹-R²³-R²²- où R²¹ et R²² sont indépendamment des groupes hydrocarbonés bivalents en C₁-C₆, et R²³ est un groupe cyclique bivalent en C₅-C₄₀, qui peut être saturé, insaturé, ou aromatique.

4. La composition selon l'une des revendications 1 à 3, dans laquelle le composant A est le méthyltriméthoxysilane.

5. La composition selon l'une des revendications 1 à 4, dans laquelle (i) les particules d'oxyde métallique sont présentes dans une proportion allant de 0,1 % à 50 % du poids de la composition ; et/ou (ii) les particules d'oxyde métallique sont choisies parmi la silice, la zircone, le dioxyde de titane, l'alumine, le dioxyde de cérium, l'oxyde d'étain, l'oxyde de zinc, l'oxyde d'antimoine, ou une combinaison de deux ou plusieurs de ceux-ci ; et/ou (iii) les particules d'oxyde métallique ont une taille moyenne allant de 1 nm à 250 nm.

6. La composition selon l'une des revendications 1 à 5, dans laquelle le solvant est choisi parmi un alcool aliphatique, un éther de glycol, un alcool cycloaliphatique, un ester aliphatique, un ester cycloaliphatique, un hydrocarbure aliphatique, un hydrocarbure cycloaliphatique, un hydrocarbure aromatique, un composé aliphatique halogéné, un composé cycloaliphatique halogéné, un composé aromatique halogéné, un éther aliphatique, un éther cycloaliphatique, un solvant amide, un solvant sulfoxyde ou une combinaison de deux ou plusieurs d'entre eux.

7. La composition selon l'une des revendications 1 à 6, dans laquelle le catalyseur est au moins un membre du groupe constitué de l'acétate de tétra-n-butylammonium, du formiate de tétra-n-butylammonium, du benzoate de tétra-n-butylammonium, du 2-éthylhexanoate de tétra-n-butylammonium, du p-éthylbenzoate de tétra-n-butylammonium, du propionate de tétra-n-butylammonium et de TBD-acétate (acétate de 1,5,7-triazabicyclo[4.4.0]déc-5-ène (TBD)).

8. Un article comprenant un substrat et un revêtement formé à partir de la composition de l'une des revendications 1 à 7 couvrant au moins une partie dudit substrat,
où la composition du revêtement, une fois durcie, a une déformation critique de 1 à 10, mesurée à une épaisseur de revêtement de 3 à 10 micromètres.

9. L'article selon la revendication 8, dans lequel le substrat est choisi parmi un polymère acrylique, un polyamide, un polyimide, un copolymère acrylonitrile-styrène, un terpolymère styrène-acrylonitrile-butadiène, un halogénure de polyvinyle, un polyéthylène, un polycarbonate, un copolycarbonate, un métal, du verre, ou une combinaison de deux ou plusieurs d'entre eux.

10. L'article selon la revendication 8 ou 9, comprenant une couche d'apprêt disposée entre la composition de revêtement et le substrat.

11. Un procédé pour former une composition de revêtement comprenant fournir :
(i) un composant A de la formule (R¹)_{d}Si(OR²)_{4-d}, dans laquelle R¹ est un hydrocarbure monovalent en C₁-C₃, R² est un hydrocarbure monovalent en C₁-C₃ ou un radical hydrogène et d est 0, 1 ou 2, et
(ii) le composant B, choisi dans le groupe constitué par la formule 1, la formule 2a ou une combinaison de celles-ci :
(R³)ₐSi(OR⁴)₄₋ₐ Formule 1
(R⁵O)ₘ(R⁶)ₙSi-Z-Si(R⁸)ₛ(OR⁷)ₚ 2a
où R³ est choisi parmi un radical alkyle linéaire ou ramifié en C₅-C₂₀, un fluoroalkyle en C₅-C₂₀, un mélange de chaîne hydrocarbonée et fluorocarbonée, une chaîne hydrocarbonée linéaire ou ramifiée en C₅-C₂₀ contenant un groupe thioester, une chaîne hydrocarbonée linéaire ou cyclique saturée ou insaturée en C₆-C₂₄ contenant un groupe amino ou un groupe urée, R⁴ est un radical hydrocarboné monovalent en C₁-C₂₀ ou un radical hydrogène ; a est égal à 1, 2 ou 3 ;
R⁵ et R⁷ sont indépendamment choisis parmi un radical hydrocarboné monovalent en C₁-C₂₀ ou un radical hydrogène ;
R⁶ et R⁸ sont indépendamment choisis parmi un radical hydrocarboné monovalent en C1 à C3 ou un radical hydrogène ; m et p sont compris entre 1 et 3 ; n et s sont compris entre 1 et 3, tels que m + n est égal à 3, et s + p est égal à 3 ;
Z est un radical hydrocarboné bivalent en C₁-C₂₄;
(iii) particules d'oxyde métallique ;
(iv) un absorbeur d'UV ;
(v) un catalyseur ; et
(vi) un solvant ; et mélanger (i)-(vi) pour former une composition,
où le composant B est présent dans une proportion de 10 à 30 % en poids par rapport au poids total de la composition de silane totale.

12. Un procédé pour former un article revêtu comprenant l'application d'une composition de revêtement sur une surface d'un substrat d'un article, dans laquelle la composition de revêtement comprend :
Un composant A de la formule (R¹)_{d}Si(OR²)_{4-d}, dans laquelle R¹ est un hydrocarbure monovalent en C₁-C₃, R² est un hydrocarbure monovalent en C₁-C₃ ou un radical hydrogène et d est 0, 1 ou 2, et
le composant B est choisi dans le groupe constitué par la formule 1, la formule 2a ou une combinaison de celles-ci :
(R³)ₐSi(OR⁴)₄₋ₐ Formule 1
(R⁵O)ₘ(R⁶)ₙSi-Z-Si(R⁸)ₛ(OR⁷)ₚ 2a
où R³ est choisi parmi un radical alkyle linéaire ou ramifié en C₅-C₂₀, un fluoroalkyle en C₅-C₂₀, un mélange de chaîne hydrocarbonée et fluorocarbonée, une chaîne hydrocarbonée linéaire ou ramifiée en C₅-C₂₀ contenant un groupe thioester, une chaîne hydrocarbonée linéaire ou cyclique saturée ou insaturée en C₆-C₂₄ contenant un groupe amino ou un groupe urée, R⁴ est un radical hydrocarboné monovalent en C₁-C₂₀ ou un radical hydrogène ; a est égal à 1, 2, ou 3 ;
R⁵ et R⁷ sont indépendamment choisis parmi un radical hydrocarboné monovalent en C₁-C₂₀ ou un radical hydrogène ;
R⁶ et R⁸ sont choisis indépendamment parmi un radical hydrocarboné monovalent en C₁ à C₃ ou un radical hydrogène ; m et p sont compris entre 1 et 3 ; n et s sont compris entre 1 et 3, de sorte que m + n est égal à 3, et s + p est égal à 3 ;
Z est un radical hydrocarboné bivalent en C₁-C₂₄;
particules d'oxyde métallique ;
un absorbeur d'UV ;
un catalyseur ; et
un solvant,
où le composant B est présent dans une proportion de 10 à 30 % en poids par rapport au poids total de la composition de silane totale.

13. Le procédé selon la revendication 12, dans laquelle la composition de revêtement est appliquée par une méthode de dépôt de revêtement choisie parmi la pulvérisation, le trempage, le coulage, la centrifugation.
